# FASCICULE DE BREVET EUROPEEN

(11) **EP 2 511 842 B1**
(45) Date de publication et mention de la délivrance du brevet: **03.06.2015**
(21) Numéro de dépôt: 12305396.9
(22) Date de dépôt: 03.04.2012
(51) Int. Cl.: G06F 17/50

(54) **Consultation de maquettes numériques à partir de postes légers**
Konsultation von digitalen Übersichtsplänen von Leichtgeräten aus
Digital model lookup from lightweight stations

(30) Priorité: 11.04.2011 FR 1153137
(43) Date de publication de la demande: 17.10.2012
(73) Titulaire: Sogitec Industries, 92150 Suresnes (FR)
(72) Inventeur: Chevochot, Pascal, 35170 BRUZ (FR); Pirot, Jérôme, 35220 SAINT DIDIER (FR)
(74) Mandataire: Thévenet, Jean-Bruno

(56) Documents cités:
- SHYAMSUNDAR N ET AL: "Collaborative virtual prototyping of product assemblies over the Internet", COMPUTER AIDED DESIGN, ELSEVIER PUBLISHERS BV., BARKING, GB, vol. 34, no. 10, 1 septembre 2002 (2002-09-01), pages 755-768, XP004354907, ISSN: 0010-4485, DOI: 10.1016/S0010-4485(01)00204-4
- ARNOLD F ED - BANISSI E ET AL: "MACAO-a journey into CAx interoperability and collaborative design", INFORMATION VISUALIZATION, 2000. PROCEEDINGS. IEEE INTERNATIONAL CONFE RENCE ON LONDON, UK 19-21 JULY 2000, LOS ALAMITOS, CA, USA,IEEE COMPUT. SOC, US, 19 juillet 2000 (2000-07-19), pages 557-562, XP010503798, DOI: 10.1109/IV.2000.859812 ISBN: 978-0-7695-0743-9
- FAN LIQING ET AL: "Integrated fixture design and analysis system based on service-oriented architecture", AUTOMATION SCIENCE AND ENGINEERING, 2008. CASE 2008. IEEE INTERNATIONAL CONFERENCE ON, IEEE, PISCATAWAY, NJ, USA, 23 août 2008 (2008-08-23), pages 656-661, XP031321713, ISBN: 978-1-4244-2022-3
- LI ET AL: "A 3D simplification algorithm for distributed visualization", COMPUTERS IN INDUSTRY, ELSEVIER SCIENCE PUBLISHERS. AMSTERDAM, NL, vol. 58, no. 3, 24 février 2007 (2007-02-24), pages 211-226, XP005903650, ISSN: 0166-3615, DOI: 10.1016/J.COMPIND.2006.05.003

## Description

L'invention se situe dans le domaine de la visualisation des maquettes numériques et de l'interaction avec celles-ci.

L'invention a pour objet un système de consultation de maquette numérique qui permet de consulter des maquettes numériques volumineuses à partir de postes légers.

Il existe plusieurs applications, de types divers, qui permettent à un utilisateur de consulter une maquette numérique ; c'est-à-dire un modèle tridimensionnel assorti de métadonnées associées. A ce sujet on peut mentionner, par exemple, des catalogues numériques, des manuels de maintenance informatisés, des systèmes d'apprentissage par ordinateur, et autres. Actuellement l'emploi de maquettes tridimensionnelles se répand.

L'utilisateur qui souhaite consulter une maquette numérique de ce genre recherche non seulement la possibilité de visualiser le produit et/ou bien des pièces mais il exige également un niveau d'interactivité en relation avec la représentation graphique du produit et/ou bien des pièces visualisées. Plus précisément, l'utilisateur souhaite un système de consultation qui lui permette de :
- définir la scène, c'est-à-dire l'ensemble de pièces qu'il souhaite observer,
- visualiser la scène,
- se déplacer par rapport à la scène visualisée,
- désigner des pièces (pour réaliser des actions ci-dessus), et
- mettre en évidence (par exemple par un rendu graphique particulier) une pièce désignée/sélectionnée par l'utilisateur, y compris des pièces qui sont occultées lors de la visualisation des pièces selon leur agencement tel que défini par la maquette numérique.

Une maquette numérique tridimensionnelle qui correspond à un produit industriel complexe qui comporte des assemblages et sous-assemblages de pièces, tel qu'un avion, est représentée par une quantité importante de données, notamment plusieurs millions de pièces et plusieurs centaines de millions de surfaces élémentaires. Des problèmes surviennent lorsqu'on cherche à permettre à un utilisateur de consulter une telle maquette numérique volumineuse au moyen d'un poste léger et/ou bien à distance au moyen d'une connexion par réseau, notamment par réseau WAN.

Si les données volumineuses représentant la maquette tridimensionnelle sont fournies au poste de l'utilisateur via un réseau alors le temps de chargement devient excessif. De plus, si le poste de l'utilisateur n'est pas de très haute performance au niveau de la puissance de calcul et de la quantité de mémoire disponible, il ne sera pas en mesure d'effectuer les calculs nécessaires à l'affichage d'une vue souhaitée de pièces et/ou bien à la réalisation de l'interactivité demandée par l'utilisateur.

Par contre, si les données représentant la maquette tridimensionnelle ne sont pas livrées au poste de l'utilisateur, il faudrait, à chaque fois que l'utilisateur souhaite interagir en relation avec une représentation graphique de la maquette affichée sur son poste, demander au serveur de produire des données modifiées appropriées. Le débit du réseau ne sera pas adéquat pour permettre une livraison rapide des données nécessaires et le temps de réponse important nuira à l'interactivité.

Une solution consiste à fournir à l'utilisateur un support physique - par exemple un CDROM ou DVD - stockant les données géométriques tridimensionnelles définissant la maquette numérique (ainsi que les métadonnées associées). Toutefois, cette solution possède l'inconvénient de disséminer des données techniques qui correspondent à une part importante de la propriété intellectuelle du fabricant et qui pourraient permettre la contrefaçon des pièces composant le produit modélisé. En outre, si l'utilisateur ne dispose que d'un poste léger (en termes de performance du processeur et/ou bien de taille de la mémoire), alors son poste ne sera pas capable d'assurer le traitement nécessaire des données avec un temps de réponse acceptable.

L'invention a été conçue au vue des inconvénients mentionnés ci-dessus.

Selon le préambule de la revendication 1, l'état de l'art plus prochain est présenté dans le document D1 "de prototypage virtuel de collaboration des ensembles de produits sur Internet» par Shyamsundar et al.

### Résumé de l'invention

L'invention a pour objet un système de consultation de maquette numérique, comportant un serveur et au moins un poste utilisateur reliés par une liaison de communication, le serveur comportant un moyen pour accéder à des données définissant au moins une maquette numérique tridimensionnelle. Le poste utilisateur comporte une unité d'affichage, et une interface utilisateur permettant à l'utilisateur de manipuler les conditions d'observation à employer lors de l'affichage de la maquette numérique, et de définir une scène correspondant à un sous ensemble de l'ensemble des pièces de la maquette numérique. Ce système est **caractérisé en ce que** le serveur est adapté pour transmettre au poste utilisateur, via la liaison de communication: d'une part des données d'image détaillée correspondant à la scène définie par le poste utilisateur, calculées conformément aux conditions d'observation définies par le poste utilisateur, les données d'image détaillée étant calculées à partir de données définissant les pièces de la maquette numérique selon une géométrie détaillée, d'autre part des données allégées définissant, selon une géométrie simplifiée, la même scène. Le système est aussi **caractérisé en ce que** le poste utilisateur comporte en outre: d'une part un moyen de réception adapté pour recevoir les données d'image détaillée et les données allégées, l'unité d'affichage étant adapté pour afficher une image détaillée sur la base des données d'image détaillée reçues du serveur; et d'autre part un moyen de calcul adapté pour calculer des données d'image représentant la même scène, lors d'un changement des conditions d'observation, à partir des données allégées.

Le système selon l'invention permet d'obtenir une réactivité satisfaisante lors de la consultation interactive d'une maquette numérique, même volumineuse, par un poste disposant de moyens informatiques plus modestes que ceux demandés par les systèmes de consultation antérieurs. Cependant, la qualité des images affichées en dehors des périodes de manipulation des conditions d'observation est supérieure à celle que l'on peut obtenir en employant les ressources propres au poste utilisateur.

Le poste utilisateur peut être un ordinateur banal équipé d'un logiciel spécifique, notamment un ordinateur doté de faibles ressources ou bien un autre poste léger (smartphone ou autre). Même des postes légers de ce genre peuvent offrir à l'utilisateur une réactivité satisfaisante puisque la mise à jour de l'image, lors d'un déplacement du point d'observation de la scène (ou autre manipulation des conditions d'observation), ne nécessite ni puissance de calcul importante, ni l'envoi d'une nouvelle requête au serveur.

Cette architecture client-serveur est caractérisée par le fait de conserver au niveau du serveur les données géométriques détaillées définissant les pièces de la maquette numérique. Cette caractéristique lui confère deux avantages majeurs :
■ protéger ainsi les droits de propriété intellectuelle du créateur de la maquette,
■ et offrir un niveau de performance élevé du fait de la réduction du volume de données transféré au client.

L'architecture client-serveur caractérise un système composé d'une fonction serveur, pouvant être repartie sur un ou plusieurs dispositifs physiques, et d'une fonction client, pouvant être instanciée sur un ou plusieurs postes client, indépendamment de la façon dont la communication entre serveur et client est mise en oeuvre.

Avantageusement le serveur dispose d'un moyen pour générer et pour transmettre au client les données allégées correspondant à la version simplifiée de la maquette numérique. Cette génération des données allégées peut s'effectuer :
■ soit dans une étape de préparation préalable à la mise à disposition de chaque maquette numérique.
■ soit « au vol », c'est-à-dire sur requête de l'utilisateur, à partir des données détaillées, sans préparation ni stockage des données allégées.

Selon certains modes de réalisation, le système de l'invention est **caractérisé en ce qu'**il comporte un moyen de calcul de calque sémantique adapté pour calculer un calque sémantique indiquant, pour chaque emplacement dans l'image détaillée, un identifiant de la pièce correspondante de la maquette numérique, et en ce que le moyen de calcul du poste utilisateur est adapté, lorsque l'utilisateur indique un emplacement dans une image détaillée affichée par l'unité d'affichage, à identifier la pièce désignée par l'utilisateur en interrogeant le calque sémantique pour déterminer quelle pièce de la maquette correspond à l'emplacement désigné par l'utilisateur. Avantageusement, dans une architecture client-serveur, le calque sémantique est calculé au niveau du serveur et transmis au client, notamment en parallèle à la transmission des données allégées.

Le calque sémantique permet à l'utilisateur de désigner (par exemple en utilisant une souris) une pièce dont au moins une partie est visible sur l'image affichée et le système peut identifier la pièce concernée en se référant au calque sémantique, ce qui est beaucoup moins onéreux en termes de calcul que les procédés usuels, et n'impose pas de disposer de la géométrie détaillée sur le poste client.

Par ailleurs, on peut concevoir le moyen de calcul du poste utilisateur de façon à pouvoir contrôler le rendu des pixels de l'image affichée par l'unité d'affichage afin que les pixels de l'image qui correspondent à la pièce désignée par l'utilisateur, telle qu'identifiée à partir du calque sémantique, soient rendus selon un affichage qui met en évidence la pièce concernée. Le calque sémantique sert à identifier rapidement les pixels concernés dont il convient de contrôler le rendu (couleur, brillance, etc.), permettant ainsi de mettre en évidence la pièce qui intéresse l'utilisateur et ceci sans devoir envoyer de requête supplémentaire au serveur.

Avantageusement le système selon l'invention est **caractérisé en ce qu'**il comporte un moyen de calcul de vignettes adapté pour calculer des données d'image définissant des vignettes (des miniatures) correspondant aux pièces visibles dans l'image détaillée affichée au niveau du poste utilisateur, et en ce que le moyen de calcul du poste utilisateur est adapté, lorsque l'utilisateur désigne une pièce affichée par l'unité d'affichage, pour vérifier si le poste utilisateur dispose d'une vignette de la pièce concernée et, éventuellement, pour commander l'affichage da la vignette reçue au-dessus de l'image affichée. Avantageusement, dans une architecture client-serveur, les vignettes des pièces dont au moins une partie est visible dans l'image détaillée sont calculées au niveau du serveur et sont transmises au client, notamment après la transmission du calque sémantique.

Lorsque le poste utilisateur dispose d'une vignette correspondant à une pièce que l'utilisateur désigne à partir de l'image affichée par l'unité d'affichage le poste peut mettre en évidence la pièce concernée en affichant, superposée à l'image principale, l'image de la vignette éventuellement représentée en forme de fantôme (c'est-à-dire par exemple en modifiant la luminance et en ajoutant un halo autour de la vignette). Cette manière de mettre en évidence une pièce désignée par l'utilisateur permet de visualiser une pièce qui est occultée dans l'image affichée selon le point de vue choisi par l'utilisateur.

En relation avec des assemblages de pièces, il peut s'avérer utile d'employer des vignettes dont le rendu dépend du niveau hiérarchique de cette pièce dans l'assemblage. Par exemple : un boulon peut faire partie d'une serrure et la serrure peut faire partie d'une porte. Lors de la mise en évidence de l'assemblage correspondant à la porte (ou bien au boulon), un rendu particulier des vignettes correspondantes peut indiquer de manière visuelle que la serrure correspond à un sous-assemblage de la porte et que le boulon fait partie d'un sous-assemblage de la serrure. Avantageusement la transparence de la vignette affichée dépend par exemple de son niveau hiérarchique, permettant ainsi à l'utilisateur d'apprécier très facilement l'agencement des pièces.

La présente invention prévoit également un poste utilisateur de consultation de maquette numérique tridimensionnelle destiné à faire partie du système susmentionné (dans la pratique, le système en comportera plusieurs). Ce poste utilisateur comporte l'unité d'affichage, l'interface utilisateur, le moyen de réception adapté pour recevoir les données d'image définissant une image détaillée ainsi que les données allégées, et le moyen de calcul adapté pour calculer, lors d'un changement des conditions d'observation, des données d'image représentant la scène à partir des données allégées correspondant à la version simplifiée de la maquette numérique.

Avantageusement le poste utilisateur dispose d'un moyen de calcul qui est adapté, lorsque l'utilisateur indique un emplacement dans une image détaillée affichée par l'unité d'affichage, à identifier la pièce désignée par l'utilisateur en interrogeant le calque sémantique mentionné ci-dessus.

Avantageusement le poste utilisateur dispose d'un moyen de calcul qui est adapté pour contrôler le rendu des pixels de l'image affichée par l'unité d'affichage, afin que les pixels de l'image qui correspond à la pièce désignée par l'utilisateur, telle qu'identifiée à partir du calque sémantique, sont rendus selon un affichage qui met en évidence la pièce concernée.

Avantageusement le poste utilisateur dispose d'un moyen de calcul qui est adapté, lorsque l'utilisateur désigne une pièce affichée par l'unité d'affichage, pour vérifier si le poste utilisateur dispose d'une vignette de la pièce concernée et pour commander l'affichage de la vignette superposée à l'image affichée.

Avantageusement le poste utilisateur dispose d'un moyen de calcul qui est adapté, lorsque l'utilisateur désigne un assemblage affiché par l'unité d'affichage, pour vérifier si le poste utilisateur dispose de vignettes des pièces de l'assemblage concerné et pour commander l'affichage des vignettes des pièces dudit assemblage selon un rendu hiérarchisé dans lequel la transparence de la vignette affichée dépend du niveau de la pièce correspondante dans la hiérarchie d'assemblage.

La présente invention prévoit un serveur destiné à faire partie du système susmentionné, selon une architecture client-serveur. Ce serveur comporte un moyen pour accéder à des données définissant la maquette numérique tridimensionnelle selon une géométrie détaillée, et une interface client adaptée pour recevoir des requêtes provenant du client et pour fournir des données en réponse ; **caractérisé en ce qu'**il comporte un moyen de calcul de données d'image définissant une image détaillée d'une scène définie par un client visualisée selon les conditions d'observation définies par le client, ladite scène correspondant à un sous ensemble de pièces de la maquette numérique sélectionné par le client, l'image détaillée étant calculée à partir desdites données définissant la maquette numérique selon la géométrie détaillée, et en ce que l'interface client est adaptée pour transmettre au client les données d'image détaillée, et des données allégées correspondant à une version simplifiée de la géométrie de ladite scène définie par le client.

Avantageusement le serveur est **caractérisé en ce qu'**il comporte un moyen de calcul d'image puissant, tel un ou des processeurs graphiques (GPU) pour calculer les images détaillées transmises aux clients, ce moyen étant mutualisé sur tous les clients.

Avantageusement le serveur est **caractérisé en ce qu'**il comporte un moyen de calcul de calque sémantique adapté pour calculer le calque sémantique susmentionné, et en ce que l'interface client est adaptée pour transmettre ledit calque sémantique au client.

Avantageusement le serveur est **caractérisé en ce qu**'il comporte un moyen de calcul des vignettes mentionnées ci-dessus.

La présente invention prévoit un produit programme d'ordinateur pour réaliser la consultation d'une maquette numérique tridimensionnelle, via une liaison de communication, comprenant des instructions pour réaliser, à l'exécution, l'étape de recevoir en entrée une instruction provenant d'un utilisateur indiquant les conditions d'observation à employer lors de l'affichage de la maquette numérique tridimensionnelle et définissant une scène correspondant à un sous ensemble de l'ensemble des pièces de la maquette numérique. Le produit programme d'ordinateur est **caractérisé en ce qu'**il comporte des instructions pour réaliser, à l'exécution, les étapes suivantes :
- recevoir depuis un serveur via la liaison de communication des données d'image détaillée définissant une image détaillée de la scène définie par l'utilisateur, visualisée selon les conditions d'observation indiquées par l'utilisateur (ces données d'image sont calculées à partir de données définissant la maquette numérique tridimensionnelle selon une géométrie détaillée), et des données allégées définissant ladite scène selon une géométrie simplifiée;
- calculer des données d'image représentant ladite scène, lors d'un changement des conditions d'observation, à partir des données allégées reçues du serveur, et afficher les données d'image produites lors de l'étape de calcul.

La présente invention prévoit en outre un produit programme d'ordinateur serveur pour réaliser la consultation d'une maquette numérique tridimensionnelle, comprenant des instructions pour réaliser, à l'exécution, les étapes suivantes: recevoir une requête provenant d'un client, et fournir des données au client pour répondre à sa requête ; **caractérisé en ce qu'**il comporte des instructions pour réaliser, à l'exécution les étapes suivantes: accéder à des données définissant la maquette numérique tridimensionnelle selon une géométrie détaillée, calculer, à partir desdites données définissant la maquette numérique selon la géométrie détaillée, des données d'image définissant une image détaillée d'une scène définie par un client visualisée selon des conditions d'observation définies par ce même client, ladite scène correspondant à un sous ensemble de pièces de la maquette numérique sélectionné par le client, et transmettre au client : les données d'image détaillée, et des données allégées correspondant à une géométrie simplifiée de ladite scène.

### Avantages et caractéristiques

Les avantages et les caractéristiques indiqués ci-dessus, ainsi que d'autres, apparaîtront plus clairement à la lecture de la description ci-dessous de certains modes de réalisation de l'invention, donnés à titre d'exemples illustratifs mais nullement limitatifs, et illustrés en se référant aux dessins en annexe, dans lesquels:
- la Figure 1 illustre la constitution d'un système de consultation de maquette numérique selon un exemple d'un mode de réalisation préféré de l'invention possédant une architecture client-serveur;
- la Figure 2 montre un exemple d'interface utilisateur graphique au niveau d'un client du système de la Figure 1 ;
- la Figure 3 représente des exemples d'images affichées par un client du système de la figure 1, dans lesquels :
   o la Figure 3a montre une image détaillée calculée par le serveur, et
   o la Figure 3b montre une image calculée du côté client à partir de donnés allégées;
- la Figure 4 représente une silhouette servant à permettre à l'utilisateur de se situer par rapport à une maquette numérique;
- la Figure 5 représente un exemple d'un calque sémantique utilisé par les modes de réalisation préférés de l'invention, correspondant à l'image affichée à la figure 3a;
- la Figure 6 illustre un premier procédé pour mettre en évidence une pièce sélectionnée;
- la Figure 7 illustre un deuxième procédé pour mettre en évidence une pièce sélectionnée, ce procédé utilisant des vignettes;
- la Figure 8 illustre un procédé pour mettre en évidence les pièces d'un assemblage en utilisant des vignettes rendues de manière hiérarchisée;
- la Figure 9 représente différentes étapes de transmission de données depuis le serveur de la figure 1 vers l'un des clients;
- la Figure 10 illustre un procédé de chargement et d'affichage d'une image détaillée qui peut être employé dans les modes de réalisation préférés de l'invention;
- la Figure 11 illustre un procédé de chargement de données de géométrie simplifiée, qui peut être employé dans les modes de réalisation préférés de l'invention;
- la Figure 12 illustre des fonctions mises en oeuvre du côté client et du côté serveur dans un exemple d'un mode de réalisation préféré de l'invention lors d'un déplacement du point d'observation de la maquette numérique;
- la Figure 13 illustre un procédé de désignation et de mise en évidence de pièces, qui peut être employé dans un mode de réalisation préféré de l'invention; et
- la Figure 14 représente la constitution d'un système de consultation de maquette numérique implémenté sur un poste autonome.

### Description détaillée de certains modes de réalisation

Des modes de réalisation de l'invention seront décrits ci-dessous en relation avec la consultation en trois dimensions de pièces, d'assemblages ou de l'ensemble d'un produit industriel, et de systèmes physiques complexes à partir d'une maquette numérique qui peut s'avérer extrêmement volumineuse. Les modes de réalisation préférés de l'invention disposent d'une architecture client-serveur. On peut également implémenter le système sur un poste autonome (c'est-à-dire sans l'intervention d'un serveur physique qui traiterait les données de la maquette numérique).

Afin de simplifier l'explication du fonctionnement de l'invention, la description ci-dessous évoque des modes de réalisation dans lesquels il n'y a qu'une seule maquette numérique. Il convient de noter que l'invention n'est pas limitée à cet égard : un seul système selon l'invention peut permettre la consultation de plusieurs maquettes numériques, chaque utilisateur pouvant créer un scène sur la maquette de son choix.

### Architecture client-serveur

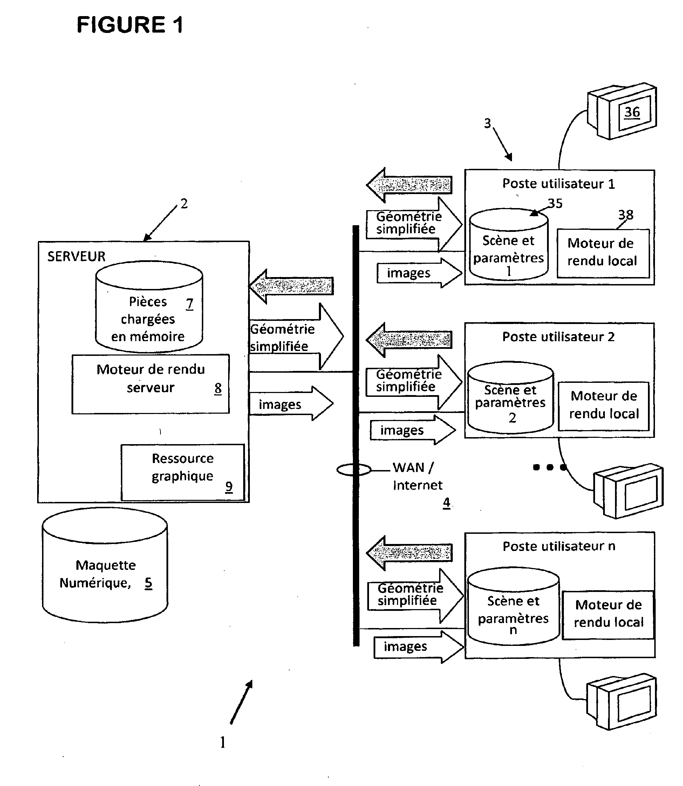

La figure 1 représente un exemple d'un système 1 de consultation de maquette numérique selon un mode de réalisation préféré de l'invention, agencé selon une architecture client-serveur dans laquelle le serveur est le seul à accéder aux données complètes (détaillées) de la maquette numérique. Il convient de préciser que la maquette numérique comporte l'ensemble de modèles tridimensionnels (3D) des pièces - en version « géométrie fine » (qui sera exploitée par le serveur) ainsi qu'en version « géométrie simplifiée » (qui sera exploitée par le client) - et une arborescence pour positionner les modèles 3D les uns par rapport aux autres dans l'espace (par exemple un graphe de scène).

L'exemple de la figure 1 concerne un système 1 qui comporte un serveur 2 qui dessert des clients multiples 3 et une maquette numérique qui représente les pièces composant un avion. Il convient de noter que ce mode de réalisation de l'invention n'est pas limité par rapport au nombre de clients 3 qui sont desservis par le serveur 2, ni par rapport à l'objet représenté par la maquette numérique. Par ailleurs on peut répartir les fonctions du serveur 2 entre plusieurs appareils, notamment une batterie de serveurs disposant de serveurs sans état, afin d'éviter des problèmes en cas de panne de l'un des serveurs. Il convient d'apprécier que dans ce texte l'expression « serveur » peut désigner un tel ensemble de serveurs multiples.

En général il convient de charger dans un moyen de stockage 5 à grande capacité les données définissant la maquette numérique, ces données étant le plus souvent très volumineuses. Le serveur 2 peut accéder aux données de la maquette numérique stockées dans le moyen de stockage 5, ce moyen de stockage étant soit local au serveur 2, soit relié au serveur, par exemple par un réseau LAN ou autre. Lorsqu'il est sollicité tel que décrit ci-dessous, le serveur 2 charge dans sa mémoire 7 des données définissant certaines pièces, notamment des pièces identifiées par des requêtes provenant des clients 3, en version « géométrie fine ». Les données chargées comportent aussi bien les modèles 3D détaillées des pièces sélectionnées que les renseignements appropriés relatifs au positionnement de ces pièces, les unes par rapport aux autres, dans l'espace. Bien que non représenté dans la figure 1, le serveur maintien en permanence, pour chaque client 3, des paramètres de chaque utilisateur, et les données nécessaires à la génération d'images qui définissent la scène demandée par ce client et les conditions d'observation.

En général le serveur 2 sera doté de bonnes ressources de calcul et de mémoire, notamment en fonction du nombre de clients simultanés attendus. De préférence le serveur 2 dispose de suffisamment de mémoire pour pouvoir charger l'ensemble des pièces visualisables de la maquette. De plus, il est avantageux que le serveur 2 comporte une ressource graphique lui permettant de calculer une image en quelques millisecondes. La sollicitation du serveur 2 par chaque client est faible puisque le calcul n'est requis qu'à l'arrêt des déplacements ou autres manipulations des conditions d'observation (voir ci-dessous). Le serveur peut, donc, être mutualisé pour un grand nombre d'utilisateurs.

Le serveur 2 dispose d'un moteur de rendu 8 ainsi que d'une ressource graphique 9 permettant le calcul d'images à haute résolution basées sur les données géométriques fines de la maquette numérique stockées dans le moyen de stockage 5. Le serveur 2 est pourvu aussi de moyens (non représentés) de transfert de données allégées qui définissent les pièces de la maquette numérique selon la version « géométrie simplifiée », ces données allégées comportant les modèles 3D dégradés des pièces sélectionnées ainsi que les renseignements appropriés relatifs au positionnement de ces pièces dans l'espace. Les renseignements de positionnement compris dans les données allégées ne sont pas de précision dégradée.

Ces données allégées définissent la géométrie de la scène à visualiser de manière suffisamment dégradée pour être calculée et affichée à partir de modèles 3D par une machine ayant des ressources limitées et pour assurer une protection de la propriété intellectuelle des données industrielles, mais la géométrie demeure suffisamment définie pour permettre à l'utilisateur de naviguer dans la maquette.

Diverses manières de produire les données allégées viendront à l'esprit de l'homme du métier comme, par exemple, l'utilisation d'un nombre réduit de surfaces élémentaires pour définir chaque pièce et/ou bien un changement de la taille/forme de ces surfaces, un changement de modélisation, etc. Eventuellement, les données allégées peuvent comporter une représentation symbolique de l'une voire plusieurs des pièces de la scène à visualiser comme, par exemple, des croix pour indiquer des fixations, des lignes pour indiquer des tubes, des boîtes avec une texture représentant l'équipement présent à la position indiquée, etc.

La nature et/ou bien le degré de l'allègement peut être contrôlé pour tenir compte des capacités du client, notamment dans un cas où le client aura informé le serveur de ses capacités au préalable. En particulier, lorsque le serveur réalise « au vol » le calcul des données allégées ce calcul peut être adapté aux capacités du client. Par ailleurs, le serveur peut disposer de plusieurs représentations simplifiées d'une scène particulière, chacune de nature et/ou de degré de l'allègement différent, et peut effectuer un choix parmi ces représentations, en fonction des capacités du client, au moment de la transmission des données allégées au client.

Selon l'exemple montré à la Figure 1, le serveur 2 dessert un nombre n quelconque de clients 3. Chaque client 3 du serveur 2 correspond à un poste utilisateur. Les performances des postes utilisateur 3, notamment en termes de puissance de calcul et de mémoire, ne sont pas particulièrement limitées. Toutefois, l'invention vise à permettre l'emploi en tant que poste utilisateur 3 de machines bureautiques classiques, c'est-à-dire des postes légers dont les performances graphiques ne sont en général pas adaptées à la visualisation 3D rapide et dont la mémoire vive ne permet pas de charger une portion significative d'une maquette numérique sous forme de données 3D non dégradées.

Selon l'exemple montré à la Figure 1, chaque client 3 est doté d'un moyen de stockage 35 qui maintient les détails actuels (et, éventuellement l'historique) de la scène visualisée et des paramètres y afférents (point d'observation, conditions d'observation, pièce(s) sélectionnées, etc.). Un moteur de rendu local 38 permet au client 3 de calculer des images qui seront affichées sur un écran 36 ou autre moyen d'affichage lors du déplacement du point d'observation de la scène (ou bien lors d'une autre manipulation des conditions d'observation).

### Liaison entre le serveur et les clients

L'invention n'est pas particulièrement limitée par rapport à la nature de la liaison entre le serveur 2 et les clients 3 : par exemple un réseau LAN, réseau WAN, Internet, intranet, etc. Selon l'exemple montré à la Figure 1, les clients 3 sont reliés au serveur 2 par l'intermédiaire d'un réseau WAN 4, et l'invention possède l'avantage de permettre la consultation à distance d'une maquette numérique tridimensionnelle complexe même en utilisant des liaisons classiques de l'Internet qui n'assurent qu'un débit de données bas ou moyen. En effet, le système selon l'invention offre à l'utilisateur d'un poste léger un niveau d'interactivité comparable à ce qu'offrirait une station de travail dans un contexte de consultation à distance, même en cas d'utilisation d'un réseau de débit aussi bas que 50 kilooctets par seconde et d'une latence de plusieurs centaines de millisecondes.

Comme on le voit selon les flèches grises de la figure 1, les clients 3 envoient des requêtes au serveur 2 et ce dernier envoie en retour différentes données aux clients, notamment des images détaillées ainsi que des données tridimensionnelles allégées. Les données sont généralement transmises par le réseau en utilisant des protocoles, des moyens de compression et de cryptage standards. L'architecture permet également de mettre en oeuvre tout protocole de transfert, et tous les moyens de cryptage et de compression, adaptés à des exigences spécifiques. Par ailleurs, afin d'éviter toute utilisation non autorisée des données, il peut être mis en oeuvre des moyens de protection, tels que des moyens d'authentification utilisateur et de cryptage.

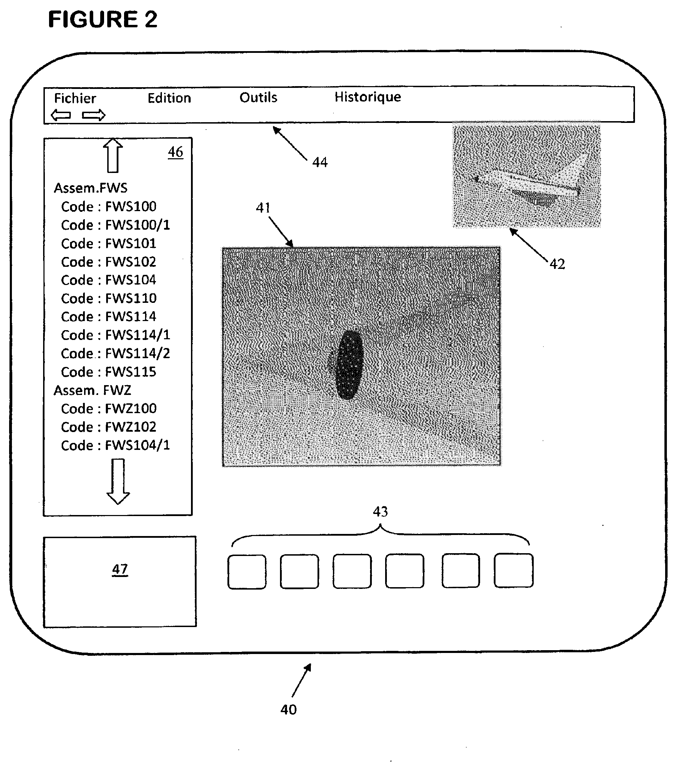

La répartition de fonctions entre le serveur 2 et les clients 3 selon ce mode de réalisation de l'invention sera mieux comprise à la lecture de la description suivante d'un exemple illustré par les Figures 2 à 13.

### Interface graphique

La Figure 2 représente de manière schématique le contenu d'une interface utilisateur graphique 40 que l'on peut employer côté client pour gérer la consultation de la maquette numérique tridimensionnelle par l'utilisateur et la mise en oeuvre des fonctions interactives. L'exemple montré à la figure 2 concerne la consultation d'une maquette numérique dans le cadre de l'interrogation d'un catalogue en ligne relatif aux pièces constituant un avion. Dans ce cas la maquette numérique comporte non seulement un modèle tridimensionnel de l'avion et de ses constituants, mais également des métadonnées associées, telles que les références des pièces, les paramètres des pièces (matériaux, propriétés physiques, version, etc.), des liens par exemple vers des points de vente, vers un manuel de maintenance ou autre, etc.

Il convient de noter que l'apparence et le contenu de l'interface utilisateur graphique 40 peuvent varier de manière substantielle en fonction de l'application visée et des choix du concepteur ; l'interface montrée à la figure 2 est une représentation schématique d'un exemple simple.

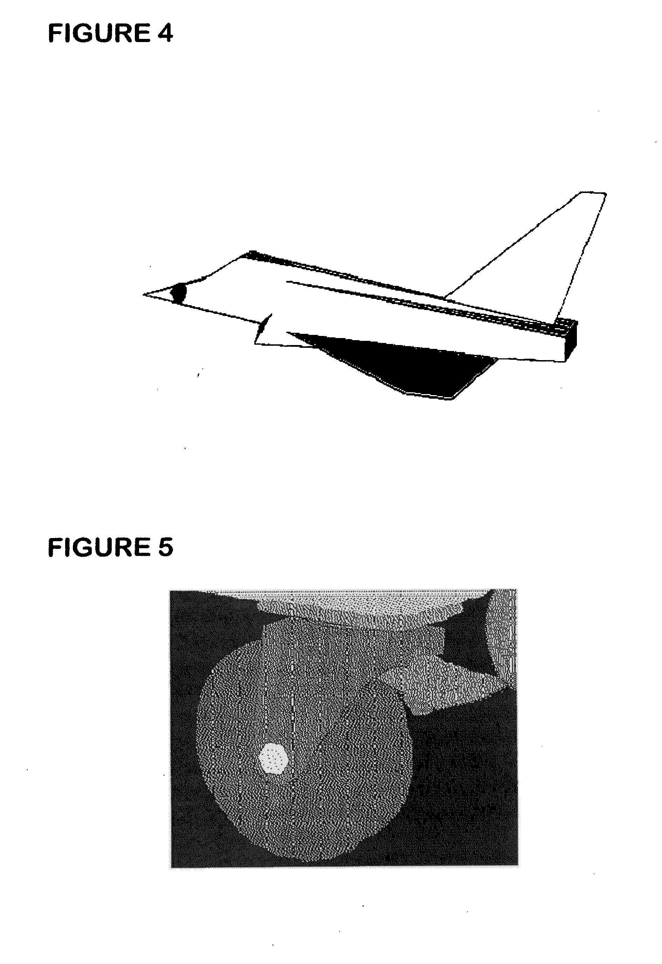

Selon l'exemple montré à la Figure 2, une image des pièces qui intéressent le client est affichée dans une fenêtre 41 qui fait partie de l'interface 40. L'invention n'est pas particulièrement limitée par rapport au procédé qui est employé par l'utilisateur pour identifier le contenu de la scène qu'il souhaite visualiser : il peut désigner de manière explicite les pièces qu'il souhaite voir, par exemple en choisissant les pièces à partir de leurs références dans une liste 46 affichée à l'écran qui indique les assemblages et les pièces faisant partie de la maquette numérique, par contre il lui est permis de simplement identifier une région de la maquette numérique qu'il souhaite voir, par exemple en utilisant une souris pour déplacer un curseur dans la fenêtre 41 ou bien en employant une image guide 42 éventuelle, qui sert à se repérer par rapport au modèle tridimensionnel du produit intégral. (Une représentation de l'image guide 42 est donnée à plus grande échelle sur la Figure 4 : avantageusement cette image guide 42 est affichée dès le lancement de l'application).

L'ensemble de pièces que souhaite visualiser un client à un moment donné est désigné dans ce document par l'expression « la scène », indépendamment de si une image de cette scène est affichée, et de si toutes les données se rapportant à cette scène sont arrivées au niveau du client. Dans le texte ci-dessous il convient de comprendre que des références à la fourniture par le client d'une indication de la scène à visualiser recouvrent toute manière d'indiquer les pièces ou bien la région de la maquette que le client souhaite visionner.

Il convient de rappeler que l'image affichée dans la fenêtre 41 de la figure 2 peut correspondre à une scène vide, c'est-à-dire un fond assorti de décorations éventuelles sans image d'une pièce quelconque de la maquette numérique tridimensionnelle. Ce cas de figure se produit, notamment, au moment du lancement de l'application quand l'utilisateur n'a pas encore choisi des pièces à visualiser.

L'interface utilisateur graphique 40 comporte aussi une section de commande 43 et une section de navigation 44 qui permettent à l'utilisateur d'effectuer diverses opérations en relation avec le catalogue en ligne et avec la consultation de la maquette numérique. L'interface utilisateur graphique 40 peut aussi comporter une région 47 où seront affichées des métadonnées ou bien des renseignements complémentaires associés à une pièce sélectionnée par l'utilisateur.

En fonction de l'application visée, l'image affichée dans la fenêtre 41 peut comporter les pièces identifiées par l'utilisateur ainsi qu'éventuellement une partie de l'environnement de celles-ci, notamment afin de permettre une appréciation du positionnement des pièces par rapport aux autres éléments du produit. Bien entendu on peut écarter des éléments de la maquette numérique qui empêchent la visualisation des pièces à afficher. Les moyens de calcul du serveur et des clients sont programmés, conformément aux exigences des applications, afin de produire les scènes voulues.

L'interface utilisateur graphique 40 permet à l'utilisateur non seulement d'identifier la pièce ou bien les pièces à visualiser dans la fenêtre 41 mais aussi de préciser les conditions d'observation, notamment le point de vue sur la scène, la taille de l'image, le champ de vue, etc., de manière interactive.

### Principe de fonctionnement

Le principe de fonctionnement du système selon l'invention sera maintenant décrit en faisant référence principalement à la Figure 1.

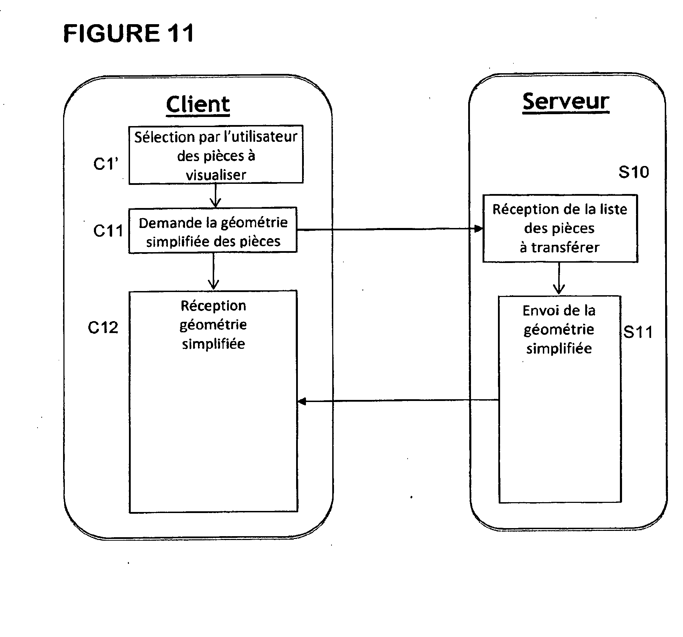

La fonction pour l'utilisateur est celle d'un système de consultation 3D haute performance avec une qualité d'image élevée. A tout instant l'utilisateur peut définir la scène de manière interactive sur son poste client 3 et peut accéder par désignation graphique aux métadonnées associées aux constituants de la maquette. Une requête identifiant la scène que souhaite voir l'utilisateur, et les conditions d'observation, est envoyé au serveur 2. Le serveur procède en plusieurs étapes (qui peuvent se dérouler en parallèle ou de manière successive) :
- le serveur 2 envoie au client 3 une suite de modèles 3D avec une précision géométrique simplifiée (ainsi que des renseignements concernant le positionnement de ceux-ci), ces modèles correspondant aux pièces que souhaite visualiser le client (la Figure 11 montre de manière schématique les échanges entre le client 3 et le serveur 2 lors de ce processus),
- le serveur 2 charge dans sa mémoire locale les mêmes modèles 3D (c'est-à-dire des modèles des mêmes constituants de la maquette), ainsi que les renseignements de positionnement appropriés, avec la meilleure précision possible,
- le serveur 2 calcule l'image 2D de la scène 3D demandée en employant les données géométriques précises et les conditions d'observation indiquées, afin de produire une image détaillée, et
- le serveur 2 envoie au client demandeur 3 l'image détaillée: les données d'image étant soumises, éventuellement, à des procédés
appropriés de compression et/ou de sécurisation (cryptage, etc.). Côté client, l'image détaillée reçue du serveur 2 est affichée dans la fenêtre 41 de l'interface utilisateur graphique.

Lorsque l'utilisateur déplace le point d'observation de la scène, en faisant valoir les fonctions interactives du système de consultation, il convient de mettre à jour l'image affichée dans la fenêtre 41. Il en va de même quand l'utilisateur fait varier d'autres conditions d'observation (champs de vue, taille de l'image, etc.). S'il fallait solliciter le serveur 2 en relation avec la mise à jour progressive de l'image lors d'un déplacement (ou bien lors d'un changement d'autres conditions d'observation de la scène affichée) alors la latence du réseau entraînerait des temps d'attente très importants qui nuiraient à l'interactivité du système. Selon la présente invention la mise à jour de l'image lors d'un changement des conditions d'observation (déplacement du point d'observation ou autre) est effectuée côté client en employant les données allégées reçues du serveur 2. Le moteur de rendu local 38 du client est en mesure de réaliser le traitement nécessaire des modèles 3D et renseignements de positionnement de géométrie dégradée.

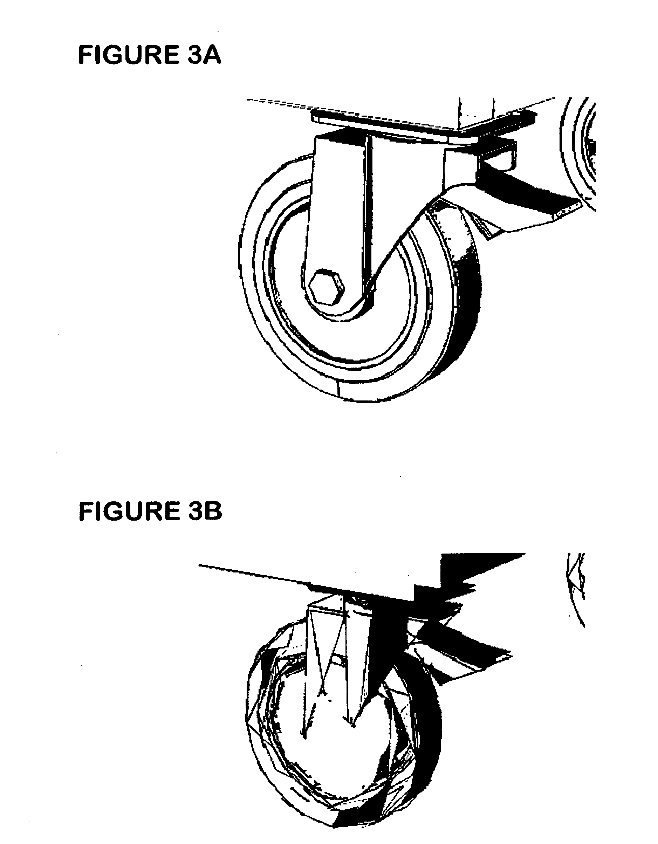

Les Figures 3A et 3B montrent des images d'une roue d'un avion : la Figure 3A correspond à une image détaillée produite par le serveur 2 à partir des données à haute précision de la maquette numérique, tandis que l'image de la Figure 3B correspond à une image de la même scène, légèrement déplacée, générée par le client 3 en employant les données allégées.

Lorsque l'utilisateur demande une modification des conditions d'observation, par exemple un changement de point de vue, l'image calculée par le client 3 à partir des données allégées (par exemple, l'image de la Fig.3B) remplace l'image antérieure provenant du serveur 2. Une fois que l'observateur a fini de se déplacer ou bien de manipuler les conditions d'observation, le client 3 redemande une image au serveur 2 comme précédemment et remplace l'image calculée localement par l'image nouvelle reçue du serveur 2.

### Affichages partiels

Les données allégées correspondant à la scène affichée dans la fenêtre 41 ne seront pas nécessairement toutes arrivées au moment où l'utilisateur commande un déplacement. De préférence, le moteur de rendu local 38 du client est agencé pour produire une mise à jour de l'image, bien que non complète, à partir de l'ensemble de données allégées reçues jusqu'au moment de la génération de la mise à jour de l'image.

### Image guide

L'image guide 42 permet à l'utilisateur de se repérer au cours d'un déplacement lorsque les données allégées intégrales ne sont pas encore arrivées. En général l'image guide 42 constitue un modèle spécial associé à la maquette numérique et, ici, elle représente la silhouette de l'avion visée. Les données définissant l'image guide 42 sont fournies par le serveur 2 au client 3 dès le lancement de l'application ou bien font partie du logiciel associé à l'application et chargé sur le poste client. De préférence, le moteur de rendu local 38 du client est adapté pour changer l'orientation de l'image guide 42 en fonction des conditions d'observation de la scène principale. Peu de ressources de calcul sont nécessaires en relation avec le traitement de l'image guide 42 du fait du volume faible de données concernées.

### Affichage et désignation

La répartition des fonctions de calcul d'images entre le serveur 2 (qui assure le calcul à partir des données précises de la maquette numérique lorsque le point d'observation est fixe) et le client 3 (qui assure le calcul à partir des données dégradées lors d'un déplacement) permet à l'utilisateur de visualiser des images fixes de haute qualité et d'obtenir un affichage dégradé uniquement lors d'un déplacement dans la scène 3D et pendant la manipulation des conditions d'observation et ceci sans temps d'attente longs et en employant des ressources limitées côté client.

Dans le système de consultation de maquette numérique tridimensionnelle de l'invention on peut éventuellement prévoir une solution particulière en matière de désignation des éléments constituants de la maquette pour les interactions de l'opérateur. A cette fin le client 3 peut recevoir un « calque sémantique » permettant la désignation des pièces à la souris, ou tout autre moyen de désignation (voir ci-dessous).

Dans le système de consultation de maquette numérique tridimensionnelle de l'invention on peut éventuellement prévoir une solution particulière en matière de mise en évidence des éléments constituants de la maquette pour les interactions de l'opérateur. A cette fin le client 3 peut exploiter le calque sémantique mentionné ci-dessus ou bien recevoir et exploiter des vignettes (voir ci-dessous).

Les deux solutions facultatives mentionnées ci-dessus permettent des actions sensiblement immédiates quand l'utilisateur met en oeuvre une fonction interactive, sans attendre des délais importants de chargement de la maquette numérique dégradée sur le client. Ces solutions, qui seront décrites par la suite, confèrent au système une très bonne fluidité, même dans le cas d'un réseau bas débit, par exemple un réseau de 50 ko/s.

Un système de consultation de maquette numérique offre à l'utilisateur la possibilité de désigner une pièce de son choix à partir d'une représentation graphique de la maquette, ou bien d'une partie de celle-ci, par exemple en vue de la réalisation d'une fonction sur cette pièce (récupération de renseignements associés, recherche de référence, etc.). L'utilisateur indique la pièce qui l'intéresse en pointant à l'aide d'une souris ou autre, par rapport à une image affichée sur son écran. Selon un mode de réalisation avantageux de l'invention, la désignation est réalisée sur le client 3 en exploitant un « calque sémantique » calculé au niveau du serveur 2. Ce calque sémantique (qui, normalement, n'est pas affiché par l'interface utilisateur graphique 40) correspond à l'image détaillée envoyée par le serveur et comporte, pour chaque position dans l'image, un identifiant de la pièce qui est présente à cette position. On peut représenter le calque sémantique sous toute forme convenable, par exemple sous forme de table de correspondance pixel-pièce.

Un exemple d'un calque sémantique correspondant à l'image détaillée de la Figure 3A est représenté de manière schématique à la Figure 5. Sur la Figure 5 chacune des régions de niveaux de gris différents correspond à une région de l'image qui est associée respectivement à une pièce spécifique qui peut être désignée. Normalement le calque sémantique utilise des identifiants associés aux pièces, et non pas des niveaux de gris, pour identifier les pièces associées aux différents pixels de l'image. Ces identifiants de pièces sont partagés par le client 3 et le serveur 2.

Le calque sémantique a les mêmes caractéristiques en termes de taille d'image, de résolution, de champ de vue, etc. que l'image détaillée calculée par le serveur et, donc, l'image calculée et le calque sémantique coïncident parfaitement. Ainsi, lorsque l'utilisateur désigne une pièce dans l'image affichée à la fenêtre 41, la position du curseur dans l'image est utilisée pour adresser le calque sémantique et ainsi récupérer l'identification de la pièce pointée dans l'image.

Par ailleurs, le calque sémantique peut comporter une table qui, pour chaque identifiant de pièce, renseigne d'autres attributs comme, par exemple, le matériau de la pièce concerné, un lien vers un document, etc.

Le calque sémantique est calculé, par exemple, par le processeur graphique (GPU) du serveur 2 par le même procédé que celui utilisé pour la génération de l'image détaillée en remplaçant l'information de couleur qui fait partie des données de pixel de l'image détaillée par une information d'identification de la pièce concernée.

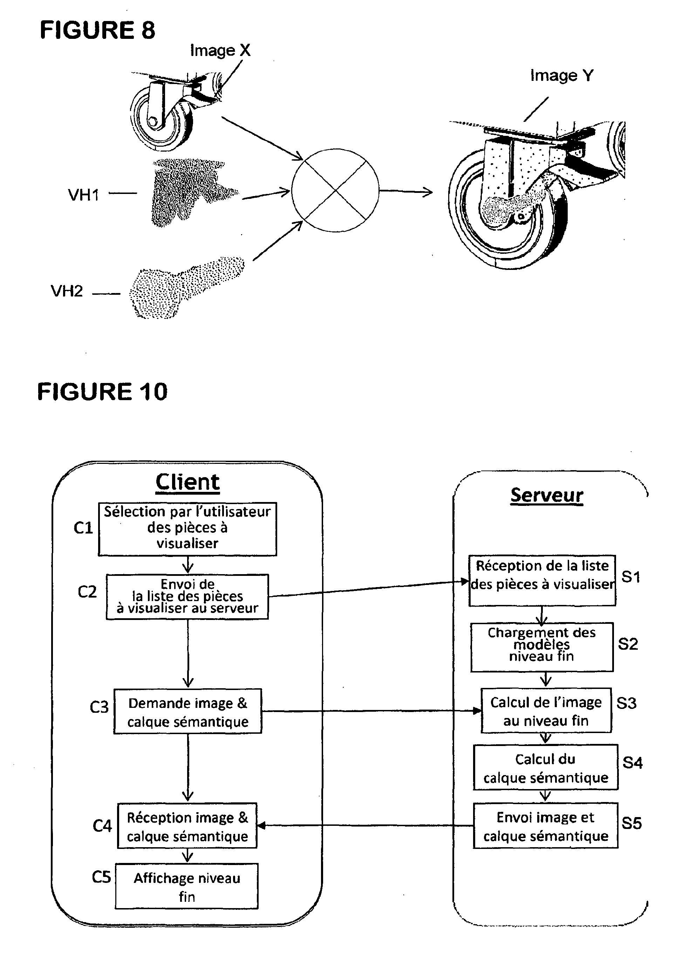

La Figure 10 montre un exemple des échanges qui peuvent avoir lieu entre un client 3 et le serveur 2 afin de charger une image détaillée et son calque sémantique se rapportant à une liste de pièces choisies par l'utilisateur.

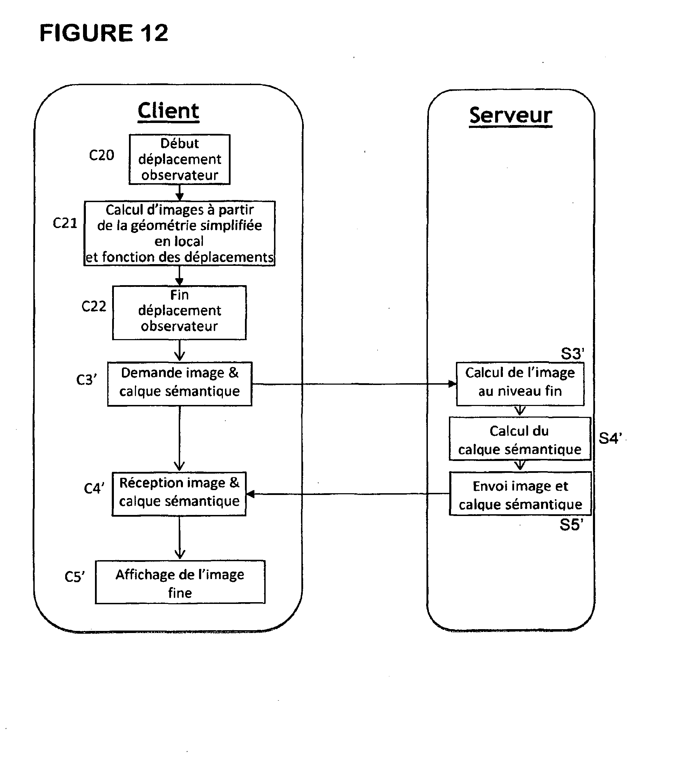

La Figure 12 montre des échanges semblables qui peuvent avoir lieu entre le client 3 et le serveur 2 une fois que l'utilisateur ait arrêtée de déplacer le point d'observation de l'image ou de réaliser une autre manipulation des conditions d'observation.

Avantageusement le serveur transmet le calque sémantique au client juste après la transmission de l'image détaillée associée. Le plus souvent le calque sémantique arrive au client bien avant la fin de réception des données de la géométrie simplifiée. Le calque sémantique permet à l'utilisateur de désigner des pièces même quand les données de géométrie simplifiée ne sont pas encore toutes arrivées. L'utilisation de ce calque sémantique permet de limiter le nombre de requêtes qui sont envoyées au serveur 2.

Contrairement aux méthodes usuelles de sélection, la désignation employant le calque sémantique peut être réalisée sans calcul 3D: il n'est pas nécessaire de télécharger la géométrie depuis le serveur et donc la latence (temps entre l'action de l'utilisateur et l'action sur l'image) est très faible.

Cette désignation par calque sémantique est extrêmement rapide, ce qui autorise la désignation continue pendant le déplacement de la souris, ou tout autre moyen de désignation, sur l'image.

### Highlight

Le calque sémantique permet d'offrir aussi à l'utilisateur des fonctions pour mettre en évidence (ou « highlighter ») une pièce dans l'image affichée dans la fenêtre 41 de l'interface utilisateur graphique 40, de manière très rapide et sans demander au serveur de transmettre une nouvelle image. Cette fonction de mise en évidence consiste à modifier le rendu de certains pixels de l'image qui correspondent à une pièce donnée, afin de faire apparaître cette pièce clairement dans l'image affichée. Les pixels de l'image dont le rendu sera modifié sont ceux qui, selon le calque sémantique, partagent l'identifiant de pièce de la pièce sélectionnée par l'utilisateur. Le changement du rendu peut concerner, par exemple, une modification de la luminance de cette partie de l'image afin de changer la teinte de la pièce, la mise en surbrillance du contour de la pièce (suite à un procédé de détection de contour effectué par le poste client 3), et/ou bien toute autre modification du rendu qui permet de faire ressortir la pièce voulue dans l'image. Tous les traitements nécessaires à la réalisation de la fonction « highlight simple » sont mis en oeuvres sur le poste client et n'induisent aucun dialogue supplémentaire avec le serveur.

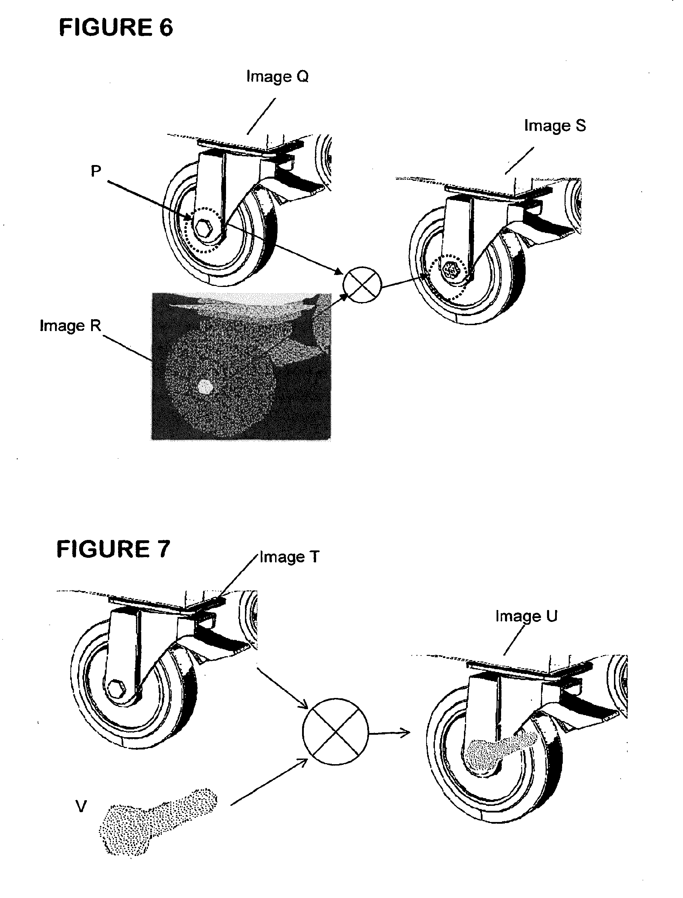

La Figure 6 montre des images qui illustrent la fonction désignée ici « highlight simple » réalisée en utilisant le calque sémantique. L'image Q de la Figure 6 correspond à une image détaillée calculée par le serveur; dans cette figure un ovale entoure la pièce P sélectionnée par l'utilisateur. L'image R de la Figure 6 montre le contenu du calque sémantique de manière schématique: les pixels qui partagent l'identifiant de pièce correspondant à la pièce P sont indiqués en blanc. L'image S de la Figure 6 indique la pièce P mise en évidence dans l'image détaillée : on note l'augmentation de brillance de la représentation de la pièce P dans l'image S par rapport à celle de la représentation de cette pièce dans l'image Q.

Selon certains modes de réalisation de l'invention on prévoit une autre manière de mettre en évidence des pièces sélectionnées par l'utilisateur, basé sur des vignettes, ou miniatures, des pièces constitutives de la maquette. La fonction de « highlight par vignette » utilise des vignettes (miniatures) qui sont des images qui contiennent uniquement la pièce concernée mais l'intégralité de la pièce vue du point d'observation précisé par l'utilisateur, incorporant notamment des parties qui sont occultées dans l'image affichée de la scène. Les vignettes sont calculées par le serveur 2.

Lors du calcul de la vignette d'une pièce, le serveur 2 dispose de renseignements, obtenus du client 3, relatifs à la taille de la fenêtre et à d'autres conditions d'observation, afin que la vignette soit dans le même repère et ait la même résolution que l'image détaillée calculée par le serveur.

Au niveau du client 3 un traitement d'image est effectué sur la miniature afin d'obtenir un rendu type fantôme, en modifiant la luminance et en ajoutant un halo autour de la vignette. Le poste client 3 affiche cette miniature en transparence par-dessus l'image détaillée calculée par le serveur.

La fonction de « highlight par vignette » est illustrée par le Figure 7. L'image T de la Figure 7 correspond à une image détaillée calculée par le serveur et la pièce à mettre en évidence est la même que celle de la Figure 6. La vignette calculée par le serveur 3 est représentée par l'élément V de la Figure 7. L'image U de la Figure 7 montre la pièce choisie mise en évidence dans l'image détaillée en utilisant la vignette V : on note que les parties occultées de la pièce sont maintenant visibles.

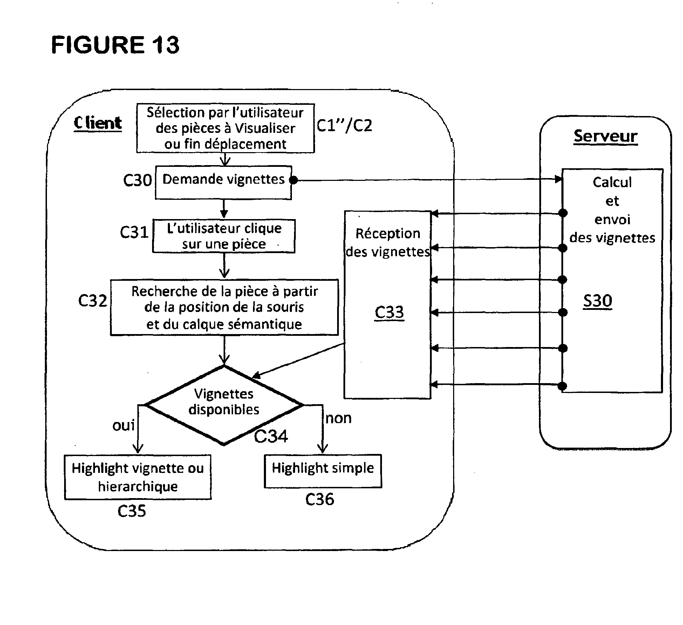

Le déclenchement du calcul des vignettes peut se faire de différentes manières. Selon un cas de figure, quand le serveur 2 reçoit une requête provenant du client 3 identifiant la scène/les pièces à afficher ainsi que les conditions d'observation, soit au début de fonctionnement soit à la fin d'un changement des conditions d'observation, il procède au calcul non seulement de l'image détaillée de la scène vue du point d'observation indiqué mais également au calcul des vignettes de toutes les pièces visibles dans cette image détaillée. Certains des échanges qui peuvent avoir lieu entre le client 3 et le serveur 2 selon ce cas de figure sont indiqués dans la Figure 13. Selon ce cas de figure il s'avère avantageux de transmettre au client 3 l'image détaillée et, éventuellement, le calque sémantique, avant la transmission des vignettes (ces premières étapes ne sont pas représentées dans la Figure 13).

Selon un autre cas de figure les vignettes ne sont calculées que sur demande expresse, notamment une demande faite par le poste client 3 au moment où l'utilisateur invoque la fonction de « highlight par vignette » en relation avec une pièce choisie.

Par rapport à la fonction de « highlight simple » décrite ci-dessus, la fonction de « highlight par vignette » permet de visualiser les parties occultées d'une pièce. Par contre, selon la mise en oeuvre détaillée de la fonction (moment de déclenchement du calcul de la vignette concernée) cette solution peut impliquer la nécessité de faire une demande spéciale au serveur 2 pour obtenir la vignette, ce qui peut induire de la latence.

Selon certains modes de réalisation de l'invention on peut prévoir une fonction d'affichage hiérarchisé des vignettes utilisées en relation avec des assemblages de pièces. Dans le cas d'assemblages de pièces (pièce constituée de plusieurs pièces pouvant elles-mêmes être des assemblages), l'affichage des pièces peut, selon ces modes de réalisation, être trié selon la profondeur des pièces dans l'arbre d'assemblage : des miniatures affichées en relation avec des constituants sont plus opaques que les miniatures affichées en relation avec le corps englobant. Il s'agit de l'emploi d'une transparence hiérarchique associée à la hiérarchie de l'assemblage.

Par exemple, une vis peut faire partie d'une serrure qui elle-même fait partie d'une porte. Au moment de l'affichage des vignettes (que le client 3 a obtenu du serveur) le poste client 3 pourrait, par exemple, afficher par-dessus l'image détaillée : la vignette correspondant à la vis avec une transparence de 0%, la vignette correspondant à la serrure avec une transparence de 30%, et la vignette correspondant à la porte avec une transparence de 60%.

La Figure 8 sert à illustrer cette fonction d'affichage hiérarchisé. L'image X de la Figure 8 correspond à une région d'image détaillée calculée par le serveur et les vignettes calculées par le serveur 3 en relation avec les deux éléments d'un assemblage à mettre en évidence sont représentées par les éléments VH1 et VH2 de la Figure 8. L'image Y de la Figure 8 montre les pièces de l'assemblage choisi mises en évidence dans l'image détaillée en utilisant les vignettes VH1 et VH2 dont la transparence a été ajustée, de préférence côté client (afin de réduire le nombre de requêtes émises vers le serveur 2, et afin de réduire la latence).

Par rapport à une approche classique où des pièces affichées en transparence sont triées par rapport à leur profondeur dans la scène 3D, la solution apportée par ces modes de réalisation de l'invention permet une meilleure compréhension des assemblages et de leur hiérarchie, comme par exemple la décomposition en LRU/SRU (d'après l'anglais « Line Replaceable Unit »/« Shop Replaceable Unit », c'est-à-dire équipement remplaçable en ligne (sur l'avion ou en atelier)/équipement remplaçable en escale ou en atelier) y compris lorsque certaines pièces sont occultés.

Les clients 3 et le serveur 2 dialoguent par des requêtes - dont le nombre et le contenu peut varier selon la mise en oeuvre détaillé du système - et des réponses aux requêtes. Certains cas de figure possibles sont montrés sur les Figures 10 à 13.

### Echanges entre client et serveur

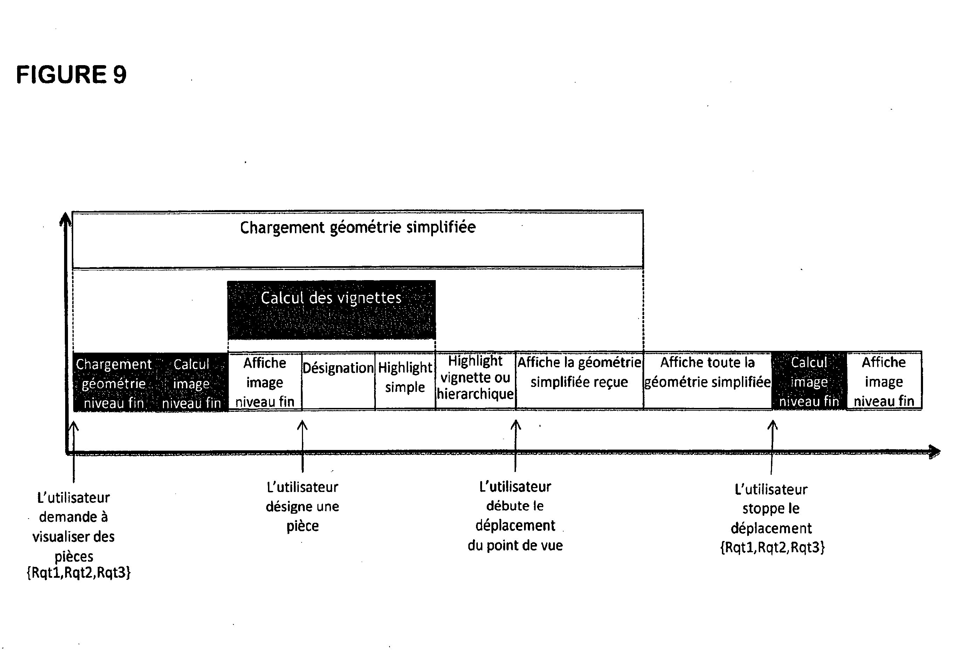

On va maintenant décrire en relation avec la Figure 9 un exemple additionnel des échanges qui peuvent avoir lieu entre un client 3 et le serveur 2 dans un système de consultation de maquette numérique 1 selon le premier mode de réalisation de l'invention qui exploite des calques sémantiques ainsi que des vignettes et qui supporte l'affichage hiérarchisé des vignettes en relation avec des assemblages de pièces. Sur la Figure 9, les rectangles gris représentent les traitements effectués côté client et les rectangles blancs représentent les traitements réalisés côté serveur.

Selon l'exemple de la Figure 9, lorsqu'un client 3 demande à visualiser des pièces le client émet trois requêtes vers le serveur :
- Rqt1 = demande au serveur de fournir les données définissant la géométrie simplifiée de la scène visée,
- Rqt2 = demande au serveur de fournir l'image précise de la scène visée, incluant le calque sémantique,
- Rqt3 = demande au serveur de fournir les vignettes.

Dès que le client 3 reçoit la réponse du serveur à la requête Rqt1, l'utilisateur peut visualiser la géométrie grossière lors des déplacements. Dès que le client 3 reçoit la réponse du serveur à la requête Rqt2, l'utilisateur peut voir en statique la scène 3D au niveau de détail fin, désigner des pièces de cette scène, et faire du « highlight simple ». Dès que le client 3 reçoit la réponse du serveur à la requête Rqt3, l'utilisateur peut faire du « highlight par vignette ».

Dans cet exemple, les différentes requêtes sont émises, traitées et exploitées en parallèle. Les requêtes ont des temps de réponse différents. Le classement des temps de réponse des requêtes en partant du plus rapide est le suivant : Rqt2, Rqt3, Rqt1. Cela signifie que l'utilisateur peut quasi-immédiatement avoir une image statique de la scène 3D au niveau fin et faire de la désignation et du « highlight simple ». Avec un peu d'attente l'utilisateur peut faire du « highlight par vignette ». Et enfin, si l'utilisateur attend suffisamment longtemps (quelques secondes) il pourra visualiser l'ensemble des modèles 3D grossiers lors de déplacements. Bien entendu l'utilisateur n'est pas obligé d'attendre ces quelques secondes avant de déplacer le point d'observation de l'image; il peut effectuer un déplacement plus tôt mais l'image qui sera affichée lors du déplacement ne sera pas complète (elle sera basée sur les pièces en géométrie dégradée dont les données sont déjà arrivées).

Selon l'exemple montré à la figure 9, les données qui définissent la scène selon une géométrie simplifiée sont transmises au client en parallèle avec les données d'image détaillée, le calque sémantique et les vignettes. Il n'est pas obligatoire de synchroniser le début de la transmission des données définissant la géométrie simplifiée avec le début de la transmission des données d'image détaillées. En cas de transmission séquentielle des données allégées et des données d'image détaillée, il convient en général de transmettre les donnés d'image détaillée en premier (puisque l'utilisateur dispose de l'image guide 42 qui lui permet de naviguer dans la maquette).

Afin de limiter les temps d'attente plusieurs autres optimisations sont possibles :
- compression de l'image qui est transmise par le serveur, afin d'en réduire la taille et donc limiter le temps de transfert sur réseau,
- mise en cache (au niveau du client 3) des pièces en géométrie dégradée reçues du serveur afin qu'elles puissent être éventuellement réutilisées sans faire de demande au serveur entre deux utilisations de l'application,
- calcul de vignettes uniquement en relation avec les pièces visibles dans le champ de vue de l'image actuelle, et
- lors du calcul des vignettes : calcul et renvoi au client en priorité (en premier) de la vignette de la pièce pointée par la souris au moment de l'envoi de Rqt2.

Le système 1 décrit ci-dessus permet de donner accès, pour de nombreux utilisateurs simultanés, au contenu d'une maquette numérique tridimensionnelle, ainsi qu'à ses métadonnées associées, par l'intermédiaire de réseaux dont le débit n'est pas particulièrement élevé (et, en particulier d'un accès Internet classique) en gommant la latence induite par le réseau, en restant compatible avec la puissance limitée des postes client, et en utilisant sur les postes client des données 3D dégradées, partielles et de préférence non persistantes. L'utilisateur peut accéder par désignation graphique aux métadonnées associées aux éléments constitutifs de la maquette.

L'architecture et la répartition de tâches originales du système permettent d'obtenir simultanément les fonctions interactives classiques, des performances très élevées (en termes de temps de réponse, de précision et de résolution de l'image, etc.) avec un nombre conséquent de pièces à afficher, ainsi que la protection de la propriété intellectuelle des données, sur un réseau sans protection particulière, et ceci même avec des ressources de calcul (côté client) et de communication limitées.

### Réalisation sur poste autonome

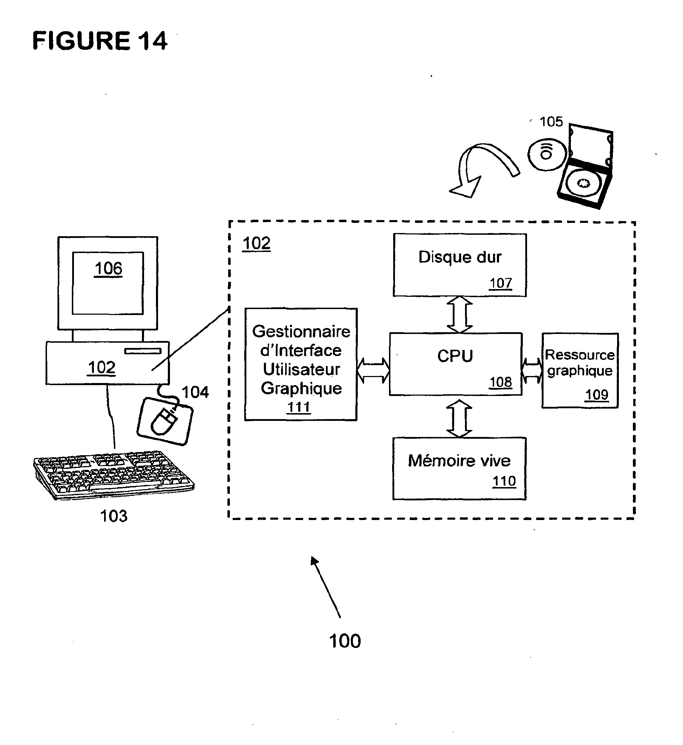

La figure 14 représente de manière schématique un exemple d'un système selon lequel l'utilisateur consulte la maquette numérique sur un poste autonome, tel un PC ou autre.

On notera que les fonctions serveur du mode de réalisation préféré de l'invention sont remplies, dans le système à poste autonome, par ce poste autonome lui-même. Pour obtenir ce mode de réalisation, le matériel du poste autonome prend en charge à la fois les fonctions client et les fonctions serveur du mode de réalisation préféré de l'invention. Les produits programme d'ordinateur client et serveur sont installés sur le poste autonome et communiquent selon le même protocole applicatif, sans solliciter aucune fonction physique de réseau.

Cette solution convient aux utilisateurs qui ne disposent pas d'un accès par réseau à la maquette numérique voulue. Les données volumineuses qui définissent la maquette numérique sont fournies à l'utilisateur sur un support approprié (CDROM, DVD ou autre) et la confidentialité des données/le respect des droits de la propriété intellectuelle sont assurés par l'une voire plusieurs des mesures suivantes - limitation de la distribution des données aux seuls utilisateurs connus, cryptage des données et/ou bien formatage spécial, dégradation de la géométrie et/ou bruitage des positions - qui viennent s'ajouter aux éventuelles clauses de licence.

Le poste utilisateur autonome peut employer une interface graphique identique à celle du mode de réalisation préféré décrit ci-dessus et les fonctions offertes à l'utilisateur sont identiques. La performance dépend des ressources du poste. De préférence le poste correspond à un PC du type station de travail possédant une puissance de calcul importante (par exemple une carte graphique avec 256 Mo de mémoire pour visualiser une maquette numérique de plusieurs milliers de pièces). Le temps de réponse perçu par l'utilisateur est amélioré lorsque les données de la maquette numérique sont chargées dans le disque dur du PC (c'est-à-dire la maquette numérique est locale sur le disque dur).

### Mode de fonctionnement

Les différentes fonctions de consultation de la maquette numérique sont réalisées comme suit :
- lorsque l'utilisateur indique les pièces et/ou bien la région de la maquette qu'il souhaite visualiser, les données géométriques détaillées se rapportant aux pièces visées sont chargées par l'unité centrale (CPU) depuis le disque dur du PC;
- des données géométriques allégées définissant les pièces visées selon une représentation simplifiée sont calculées à partir des données de la maquette numérique sur le disque dur et/ou bien extraites de ces dernières, le calcul éventuel étant réalisé en employant les ressources (unité centrale/CPU, mémoire, etc.) du poste utilisateur;
- une image détaillée est calculée à partir des données détaillées de la maquette se rapportant aux pièces visées, et éventuellement de l'environnement, (visualisées selon le point de vue précisé par l'utilisateur et, éventuellement, selon d'autres conditions de visualisation que l'utilisateur aura indiquées), ce calcul étant effectué en utilisant les ressources du poste utilisateur;
- le calque sémantique se rapportant à l'image détaillée est calculée en employant les ressources du poste utilisateur;
- les vignettes sont calculées pour les pièces dont au moins une partie est visible dans l'image détaillée, en utilisant les ressources du PC;
- l'image détaillée est affichée conformément aux règles de l'interface graphique employée par le poste utilisateur/l'application;
- lorsque l'utilisateur déplace le point d'observation dans la scène 3D, ou procède à la manipulation d'autres conditions d'observation de la scène affichée, l'image est recalculée à partir des données allégées (à la différence du premier mode de réalisation, ces données allégées sont non seulement utilisées mais également calculées au niveau du poste utilisateur);
- lorsque l'utilisateur désigne une pièce, par exemple en positionnant un curseur par rapport à l'image affichée, le PC identifie la pièce visée en interrogeant le calque sémantique pour déterminer quelle pièce correspond à la position du curseur dans l'image;
- la fonction de « highlight simple » (ou « mise en valeur simple ») est réalisée en employant le calque sémantique (approche beaucoup plus rapide qu'une approche basée sur le procédé de lancer de rayon);
- la fonction de « highlight par vignette » (ou « mise en valeur par vignette ») est réalisée en employant les vignettes une fois calculées en local.

### Modifications et aménagements

Bien que des modes de réalisation particuliers de la présente invention aient été décrits ci-dessus, l'homme du métier comprendra que diverses modifications et aménagements peuvent se pratiquer dans ceux-ci sans sortir du cadre de la présente invention.

Par exemple, selon la description ci-dessus du premier mode de réalisation de l'invention les données allégées qui représentent la version simplifiée de la maquette numérique font partie même de cette maquette et, au moment de satisfaire à une demande de l'un de ses clients, le serveur procède à la lecture des données allégées qui représentent les pièces sélectionnées par le client. Toutefois, on peut concevoir des systèmes selon l'invention dans lesquels le calcul des données allégées est réalisé au vol par le serveur à partir des données détaillées, notamment au moment de satisfaire à une demande d'un client.

Par ailleurs, on peut fournir au client/poste utilisateur des données qui sont plus ou moins allégées (par rapport aux données les plus détaillées) en fonction des ressources du client/poste utilisateur et/ou bien en fonction des propriétés du réseau de transmission éventuel (notamment au débit ou bien à l'encombrement de celui-ci). Dans le cas d'un poste utilisateur/client performant on pourrait créer les données « allégées » en bruitant volontairement les données détaillées.

## Revendications

1. Système (1/100) de consultation de maquette numérique, comportant un serveur et au moins un poste utilisateur (3/100) reliés par une liaison de communication,
le serveur comportant un moyen pour accéder à des données définissant une maquette numérique tridimensionnelle, et
le poste utilisateur comportant une unité d'affichage (36/106), et une interface utilisateur (40) permettant à l'utilisateur de définir les conditions d'observation à employer lors de l'affichage de la maquette numérique, et de définir une scène correspondant à un sous ensemble de l'ensemble des pièces de la maquette numérique,
le système étant **caractérisé en ce que**:
le serveur est adapté pour transmettre au poste utilisateur, via la liaison de communication :
des données d'image détaillée correspondant à une scène définie par le poste utilisateur, calculées par le serveur conformément aux conditions d'observation définies par le poste utilisateur, les données d'image détaillée étant calculées par le serveur à partir de données définissant les pièces de la maquette numérique selon une géométrie détaillée, et
des données allégées définissant, selon une géométrie simplifiée, ladite scène définie par l'utilisateur;
et **en ce que** le poste utilisateur comporte en outre un moyen de réception adapté pour recevoir lesdites données d'image détaillée et lesdites données allégées, l'unité d'affichage étant adapté pour afficher une image détaillée de ladite scène sur la base des données d'image détaillée reçues du serveur, et
un moyen de calcul (38/102) adapté pour calculer des données d'image représentant ladite scène, lors d'un changement des conditions d'observation, à partir des données allégées reçues du serveur.

2. Système (1/100) de consultation de maquette numérique selon la revendication 1, **caractérisé en ce que** le serveur comporte un moyen de calcul de calque sémantique adapté pour calculer un calque sémantique indiquant pour chaque emplacement dans l'image détaillée un identifiant de la pièce correspondante de la maquette numérique, le serveur étant adapté pour transmettre ledit calque sémantique au poste utilisateur, et **en ce que** le moyen de calcul (38/102) du poste utilisateur est adapté, lorsque l'utilisateur indique un emplacement dans une image détaillée affichée par l'unité d'affichage (36/106), à identifier la pièce désignée par l'utilisateur en interrogeant le calque sémantique pour déterminer quelle pièce de la maquette correspond à l'emplacement désigné par l'utilisateur.

3. Système (1/100) de consultation de maquette numérique selon la revendication 2, **caractérisé en ce que** le moyen de calcul (38/102) du poste utilisateur est adapté pour contrôler le rendu des pixels de l'image affichée par l'unité d'affichage (36/106) afin que les pixels de l'image qui correspondent à la pièce désignée par l'utilisateur, telle qu'identifiée à partir du calque sémantique, soient rendus selon un affichage qui met en évidence la pièce concernée.

4. Système (1/100) de consultation de maquette numérique selon la revendication 1, 2 ou 3, **caractérisé en ce que** le serveur est adapté pour transmettre au poste utilisateur des données d'image définissant des vignettes correspondant aux pièces visibles dans l'image détaillée, et **en ce que** le moyen de calcul (38/102) du poste utilisateur est adapté, lorsque l'utilisateur désigne une pièce affichée par l'unité d'affichage (36/106), pour vérifier si le poste utilisateur dispose d'une vignette de la pièce concernée et pour commander l'affichage de la vignette reçue, superposée à l'image affichée.

5. Système (1/100) de consultation de maquette numérique selon la revendication 4, **caractérisé en ce que** le moyen de calcul (38/102) du poste utilisateur est adapté, lorsque l'utilisateur désigne un assemblage affiché par l'unité d'affichage (36/106), pour vérifier si le poste utilisateur dispose de vignettes des pièces de l'assemblage concerné et pour commander l'affichage des vignettes des pièces dudit assemblage selon un rendu hiérarchisé dans lequel la transparence de la vignette affichée dépend du niveau de la pièce correspondante dans la hiérarchie d'assemblage.

6. Système (1) de consultation de maquette numérique selon l'une quelconque des revendications précédentes, **caractérisé en ce que** le serveur (2) est adapté pour calculer lesdites données allégées correspondant à une version simplifiée de la maquette numérique.

7. Système (1) de consultation de maquette numérique selon la revendication 4, **caractérisé en ce que** le serveur (2) comporte un moyen (8) de calcul de vignettes adapté pour calculer des données d'image définissant lesdites vignettes.

8. Poste utilisateur (3/100) de consultation de maquette numérique tridimensionnelle, le poste utilisateur comportant une unité d'affichage (36/106), et une interface utilisateur permettant à l'utilisateur de définir les conditions d'observation à employer lors de l'affichage de la maquette numérique, et de définir une scène correspondant à un sous ensemble de l'ensemble des pièces de la maquette numérique, le poste utilisateur (3/100) étant **caractérisé en ce qu'**il comporte en outre :
un moyen de réception adapté pour recevoir depuis un serveur au moyen d'une liaison de communication:
des données d'image définissant une image détaillée de la scène définie au moyen de l'interface utilisateur, calculées selon les conditions d'observation définies au moyen de l'interface utilisateur, et
des données allégées définissant ladite scène selon une géométrie simplifiée,
l'unité d'affichage étant adapté pour afficher une image détaillée de ladite scène sur la base des données d'image détaillée reçues du serveur; et
un moyen de calcul (38/102) adapté pour calculer des données d'image représentant ladite scène, lors d'un changement des conditions d'observation, à partir desdites données allégées reçues du serveur.

9. Poste utilisateur (3/100) de consultation de maquette numérique selon la revendication 8, **caractérisé en ce que** le moyen de réception est adapté pour recevoir depuis le serveur un calque sémantique qui indique, pour chaque emplacement dans l'image détaillée, un identifiant de la pièce correspondante de la maquette numérique, et **en ce que** le moyen de calcul (38/102) est adapté, lorsque l'utilisateur indique un emplacement dans une image détaillée affichée par l'unité d'affichage (36/106), à identifier la pièce désignée par l'utilisateur en interrogeant le calque sémantique reçu du serveur.

10. Poste utilisateur (3/100) de consultation de maquette numérique selon la revendication 9, **caractérisé en ce que** le moyen de calcul (38/102) est adapté pour contrôler le rendu des pixels de l'image affichée par l'unité d'affichage (36/106) afin que les pixels de limage qui correspondent à la pièce désignée par l'utilisateur, telle qu'identifiée à partir du calque sémantique, soient rendus selon un affichage qui met en évidence la pièce concernée.

11. Poste utilisateur (3/100) de consultation de maquette numérique selon la revendication 8, 9 ou 10, **caractérisé en ce que** le moyen de réception est adapté pour recevoir depuis le serveur des vignettes des pièces visibles dans l'image détaillée, et **en ce que** le moyen de calcul (38/102) est adapté, lorsque l'utilisateur désigne une pièce affichée par l'unité d'affichage (36/106), pour vérifier si le poste utilisateur dispose d'une vignette de la pièce concernée et pour commander l'affichage da la vignette reçue du serveur, superposée à l'image affichée.

12. Poste utilisateur (3/100) de consultation de maquette numérique selon la revendication 11, **caractérisé en ce que** le moyen de calcul (38/102) est adapté, lorsque l'utilisateur désigne un assemblage affiché par l'unité d'affichage (36/106), pour vérifier si le poste utilisateur dispose de vignettes des pièces de l'assemblage concerné et pour commander l'affichage des vignettes des pièces dudit assemblage selon un rendu hiérarchisé dans lequel la transparence de la vignette affichée dépend du niveau de la pièce correspondante dans la hiérarchie d'assemblage.

13. Serveur (2) de système de consultation de maquette numérique adapté pour permettre la consultation d'une maquette numérique tridimensionnelle par au moins un client (3), le serveur (2) comportant un moyen pour accéder à des données définissant la maquette numérique tridimensionnelle selon une géométrie détaillée, et une interface client adaptée pour recevoir des requêtes provenant du client (3) et pour fournir des données au client (3) en réponse;
**caractérisé en ce qu'**il comporte en outre un moyen (8) de calcul de données d'image définissant une image détaillée d'une scène définie par un client (3) visualisée selon des conditions d'observation définies par le client (3), ladite scène correspondant à un sous ensemble de pièces de la maquette numérique sélectionné par le client, l'image détaillée étant calculée à partir desdites données définissant la maquette numérique selon la géométrie détaillée,
et **en ce que** l'interface client du serveur (2) est adaptée pour transmettre au client (3) les données d'image détaillée, et des données allégées définissant, selon une géométrie simplifiée, ladite scène définie par le client.

14. Serveur (2) de système de consultation de maquette numérique selon la revendication 13, **caractérisé en ce qu'**il comporte un moyen de calcul de calque sémantique adapté pour calculer un calque sémantique indiquant pour chaque emplacement dans l'image détaillée un identifiant de la pièce correspondante de la maquette numérique, et **en ce que** l'interface client est adaptée pour transmettre ledit calque sémantique au client (3).

15. Serveur (2) de système de consultation de maquette numérique selon la revendication 13 ou 14, **caractérisé en ce qu'**il comporte un moyen de calcul de vignettes adapté pour calculer des données d'image définissant des vignettes correspondant aux pièces visibles dans l'image détaillée fournie au client, et **en ce que** l'interface client est adaptée pour transmettre au client (3) lesdites données d'image définissant les vignettes.

16. Produit programme d'ordinateur pour réaliser la consultation d'une maquette numérique tridimensionnelle, via une liaison de communication, comprenant des instructions pour réaliser, à l'exécution, l'étape suivante:
recevoir en entrée une instruction provenant d'un utilisateur indiquant les conditions d'observation à employer lors de l'affichage de la maquette numérique tridimensionnelle, et définissant une scène correspondant à un sous ensemble de l'ensemble des pièces de la maquette numérique,
**caractérisé en ce qu'**il comporte des instructions pour réaliser, à l'exécution, les étapes suivantes :
recevoir depuis un serveur via la liaison de communication :
des données d'image détaillée définissant une image détaillée de la scène définie par l'utilisateur visualisée selon les conditions d'observation définies par l'utilisateur, ces données d'image étant calculées à partir de données définissant la maquette numérique tridimensionnelle selon une géométrie détaillée, et
des données allégées définissant ladite scène selon une géométrie simplifiée,
calculer des données d'image représentant ladite scène lors d'un changement des conditions d'observation, à partir des données allégées reçues du serveur, et
afficher les données d'image produites lors de l'étape de calcul.

17. Produit programme d'ordinateur pour permettre la consultation d'une maquette numérique tridimensionnelle par un poste client (3), comprenant des instructions pour réaliser, à l'exécution, les étapes suivantes:
recevoir une requête provenant d'un client, et
fournir des données au client (3) pour répondre à sa requête;
**caractérisé en ce qu'**il comporte des instructions pour réaliser, à l'exécution, les étapes suivantes :
accéder à des données définissant la maquette numérique tridimensionnelle selon une géométrie détaillée,
calculer, à partir desdites données définissant la maquette numérique selon la géométrie détaillée, des données d'image définissant une image détaillée d'une scène définie par un client visualisée selon des conditions d'observation définies par le client, ladite scène correspondant à un sous ensemble de pièces de la maquette numérique sélectionné par le client,
et
transmettre au client (3) :
lesdites données d'image détaillées, et
des données allégées définissant ladite scène selon une géométrie simplifiée.

## Patentansprüche

1. System (1/100) zum Einsehen eines digitalen Modells, umfassend einen Server und wenigstens eine Benutzerstation (3/100), die durch eine Kommunikationsverbindung verbunden sind,
wobei der Server ein Mittel umfasst, um auf Daten, die ein dreidimensionales digitales Modell definieren, zuzugreifen, und
wobei die Benutzerstation eine Anzeigeeinheit (36/106) und eine Benutzerschnittstelle (40) umfasst, die dem Benutzer ermöglicht, die bei der Anzeige des digitalen Modells zu verwendenden Betrachtungsbedingungen zu definieren sowie eine Szene zu definieren, die einer Untereinheit der Gesamtheit der Teile des digitalen Modelles entspricht,
wobei das System **dadurch gekennzeichnet ist, dass**:
der Server dazu ausgelegt ist, an die Benutzerstation über die Kommunikationsverbindung folgendes zu übertragen:
Daten eines einer durch die Benutzerstation definierten Szene entsprechenden Detailbildes, die durch den Server entsprechend den durch die Benutzerstation definierten Betrachtungsbedingungen berechnet werden, wobei die Detailbilddaten durch den Server anhand von Daten, die die Teile des digitalen Modells entsprechend einer detaillierten Geometrie definieren, berechnet werden, und
vereinfachte Daten, die die durch den Benutzer definierte Szene entsprechend einer vereinfachten Geometrie definieren;
und dass die Benutzerstation ferner ein Empfangsmittel umfasst, das dazu ausgelegt ist, die Detailbilddaten und die vereinfachten Daten zu empfangen, wobei die Anzeigeeinheit dazu ausgelegt ist, ein Detailbild der Szene auf der Basis der von dem Server empfangenen Detailbilddaten anzuzeigen, und
ein Berechnungsmittel (38/102), das dazu ausgelegt ist, die Szene darstellende Bilddaten bei einer Änderung der Betrachtungsbedingungen, anhand der von dem Server empfangenen vereinfachten Daten zu berechnen.

2. System (1/100) zum Einsehen eines digitalen Modells nach Anspruch 1, **dadurch gekennzeichnet, dass** der Server ein Mittel zur Berechnung einer semantischen Pause umfasst, das dazu ausgelegt ist, eine semantische Pause zu berechnen, die für jede Stelle in dem Detailbild ein Kennzeichen des entsprechenden Teils des digitalen Modells angibt, wobei der Server dazu ausgelegt ist, die semantische Pause an die Benutzerstation zu übertragen, und dass das Berechnungsmittel (38/102) der Benutzerstation dazu ausgelegt ist, wenn der Benutzer eine Stelle in einem durch die Anzeigeeinheit (36/106) angezeigten Detailbild angibt, das durch den Benutzer bezeichnete Teil dadurch zu erkennen, dass die semantische Pause abgefragt wird, um zu bestimmen, welches Teil des Modells der durch den Benutzer bezeichneten Stelle entspricht.

3. System (1/100) zum Einsehen eines digitalen Modells nach Anspruch 2, **dadurch gekennzeichnet, dass** das Berechnungsmittel (38/102) der Benutzerstation dazu ausgelegt ist, die Wiedergabe der Pixel des durch die Anzeigeeinheit (36/106) angezeigten Bildes zu kontrollieren, damit die Pixel des Bildes, die dem durch den Benutzer bezeichneten Teil, wie anhand der semantischen Pause erkannt, entsprechen, in einer Anzeige wiedergegeben werden, die das betreffende Teil hervorhebt.

4. System (1/100) zum Einsehen eines digitalen Modells nach Anspruch 1, 2 oder 3, **dadurch gekennzeichnet, dass** der Server dazu ausgelegt ist, an die Benutzerstation Bilddaten zu übertragen, die den in dem Detailbild sichtbaren Teilen entsprechende Vignetten definieren, und dass das Berechnungsmittel (38/102) der Benutzerstation dazu ausgelegt ist, wenn der Benutzter ein durch die Anzeigeeinheit (36/106) angezeigtes Teil bezeichnet, zu überprüfen, ob die Benutzerstation über eine Vignette des betreffenden Teils verfügt, und das Anzeigen der empfangenen, dem angezeigten Bild überlagerten Vignette zu steuern.

5. System (1/100) zum Einsehen eines digitalen Modells nach Anspruch 4, **dadurch gekennzeichnet, dass** das Berechnungsmittel (38/102) der Benutzerstation dazu ausgelegt ist, wenn der Benutzer eine durch die Anzeigeeinheit (36/106) angezeigte Anordnung bezeichnet, zu überprüfen, ob die Benutzerstation über Vignetten der Teile der betreffenden Anordnung verfügt, und das Anzeigen der Vignetten der Teile der Anordnung in einer hierarchisierten Wiedergabe, bei der die Transparenz der angezeigten Vignette von der Ebene des entsprechenden Teils in der Anordnungshierarchie abhängt, zu steuern.

6. System (1) zum Einsehen eines digitalen Modells nach einem der vorhergehenden Ansprüche, **dadurch gekennzeichnet, dass** der Server (2) dazu ausgelegt ist, die vereinfachten Daten, die einer vereinfachten Version des digitalen Modells entsprechen, zu berechnen.

7. System (1) zum Einsehen eines digitalen Modells nach Anspruch 4, **dadurch gekennzeichnet, dass** der Server (2) ein Mittel (8) zur Berechnung von Vignetten umfasst, das dazu ausgelegt ist, die Vignetten definierende Bilddaten zu berechnen.

8. Benutzerstation (3/100) zum Einsehen eines dreidimensionalen digitalen Modells, wobei die Benutzerstation eine Anzeigeeinheit (36/106) und eine Benutzerschnittstelle umfasst, die dem Benutzer ermöglicht, die bei der Anzeige des digitalen Modells zu verwendenden Betrachtungsbedingungen zu definieren sowie eine Szene zu definieren, die einer Untereinheit der Gesamtheit der Teile des digitalen Modells entspricht, wobei die Benutzerstation (3/100) **dadurch gekennzeichnet ist, dass** sie ferner umfasst:
ein Empfangsmittel, das dazu ausgelegt ist, von einem Server mittels einer Kommunikationsverbindung folgendes zu empfangen:
Bilddaten, die ein Detailbild der mittels der Benutzerschnittstelle definierten Szene definieren, die entsprechend den mittels der Benutzerschnittstelle definierten Betrachtungsbedingungen berechnet werden, und
vereinfachte Daten, die die Szene entsprechend einer vereinfachten Geometrie definieren,
wobei die Anzeigeeinheit dazu ausgelegt ist, ein Detailbild der Szene auf der Basis der von dem Server empfangenen Detailbilddaten anzuzeigen; und
ein Berechnungsmittel (38/102), das dazu ausgelegt ist, die Szene darstellende Bilddaten bei einer Änderung der Betrachtungsbedingungen, anhand der von dem Server empfangenen vereinfachten Daten zu berechnen.

9. Benutzerstation (3/100) zum Einsehen eines digitalen Modells nach Anspruch 8, **dadurch gekennzeichnet, dass** das Empfangsmittel dazu ausgelegt ist, von dem Server eine semantische Pause zu empfangen, die für jede Stelle in dem Detailbild ein Kennzeichen des entsprechenden Teils des digitalen Modells angibt, und dass das Berechnungsmittel (38/102) dazu ausgelegt ist, wenn der Benutzer eine Stelle in einem durch die Anzeigeeinheit (36/106) angezeigten Detailbild angibt, das durch den Benutzer bezeichnete Teil dadurch zu erkennen, dass die von dem Server empfangene semantische Pause abgefragt wird.

10. Benutzerstation (3/100) zum Einsehen eines digitalen Modells nach Anspruch 9, **dadurch gekennzeichnet, dass** das Berechnungsmittel (38/102) dazu ausgelegt ist, die Wiedergabe der Pixel des durch die Anzeigeeinheit (36/106) angezeigten Bildes zu kontrollieren, damit die Pixel des Bildes, die dem durch den Benutzer bezeichneten Teil, wie anhand der semantischen Pause erkannt, entsprechen, in einer Anzeige wiedergegeben werden, die das betreffende Teil hervorhebt.

11. Benutzerstation (3/100) zum Einsehen eines digitalen Modells nach Anspruch 8, 9 oder 10, **dadurch gekennzeichnet, dass** das Empfangsmittel dazu ausgelegt ist, von dem Server Vignetten der in dem Detailbild sichtbaren Teile zu empfangen, und dass das Berechnungsmittel (38/102) dazu ausgelegt ist, wenn der Benutzter ein durch die Anzeigeeinheit (36/106) angezeigtes Teil bezeichnet, zu überprüfen, ob die Benutzerstation über eine Vignette des betreffenden Teils verfügt, und das Anzeigen der von dem Server empfangenen, dem angezeigten Bild überlagerten Vignette zu steuern.

12. Benutzerstation (3/100) zum Einsehen eines digitalen Modells nach Anspruch 11, **dadurch gekennzeichnet, dass** das Berechnungsmittel (38/102) dazu ausgelegt ist, wenn der Benutzer eine durch die Anzeigeeinheit (36/106) angezeigte Anordnung bezeichnet, zu überprüfen, ob die Benutzerstation über Vignetten der Teile der betreffenden Anordnung verfügt, und das Anzeigen der Vignetten der Teile der Anordnung in einer hierarchisierten Wiedergabe, bei der die Transparenz der angezeigten Vignette von der Ebene des entsprechenden Teils in der Anordnungshierarchie abhängt, zu steuern.

13. Server (2) eines Systems zum Einsehen eines digitalen Modells, der dazu ausgelegt ist, das Einsehen eines dreidimensionalen digitalen Modells durch wenigstens einen Client (3) zu ermöglichen, wobei der Server (2) ein Mittel umfasst, um auf Daten, die das dreidimensionale digitale Modell entsprechend einer detaillierten Geometrie definieren, zuzugreifen, sowie eine Client-Schnittstelle umfasst, die dazu ausgelegt ist, von dem Client (3) kommende Anfragen zu empfangen und dem Client (3) als Reaktion Daten bereitzustellen;
**dadurch gekennzeichnet, dass** er ferner ein Mittel (8) zur Berechnung von Bilddaten umfasst, die ein Detailbild einer durch einen Client (3) definierten Szene definieren, das entsprechend durch den Client (3) definierten Betrachtungsbedingungen dargestellt wird, wobei die Szene einer Untereinheit von Teilen des durch den Client ausgewählten digitalen Modells entspricht, wobei das Detailbild anhand der Daten, die das digitale Modell entsprechend der detaillierten Geometrie definieren, berechnet wird,
und dass die Client-Schnittstelle des Servers (2) dazu ausgelegt ist, die Detailbilddaten und vereinfachte Daten, die die durch den Client definierte Szene entsprechend einer vereinfachten Geometrie definieren, an den Client (3) zu übertragen.

14. Server (2) eines Systems zum Einsehen eines digitalen Modells nach Anspruch 13, **dadurch gekennzeichnet, dass** er ein Mittel zur Berechnung einer semantischen Pause umfasst, das dazu ausgelegt ist, eine semantische Pause zu berechnen, die für jede Stelle in dem Detailbild ein Kennzeichen des entsprechenden Teils des digitalen Modells angibt, und dass die Client-Schnittstelle dazu ausgelegt ist, die semantische Pause an den Client (3) zu übertragen.

15. Server (2) eines Systems zum Einsehen eines digitalen Modells nach Anspruch 13 oder 14, **dadurch gekennzeichnet, dass** er ein Mittel zur Berechnung von Vignetten umfasst, das dazu ausgelegt ist, Bilddaten zu berechnen, die Vignetten definieren, welche den in dem dem Client bereitgestellten Detailbild sichtbaren Teilen entsprechen, und dass die Client-Schnittstelle dazu ausgelegt ist, die die Vignetten definierenden Bilddaten an den Client (3) zu übertragen.

16. Computerprogrammprodukt zur Durchführung des Einsehens eines dreidimensionalen digitalen Modells, über eine Kommunikationsverbindung, das Befehle umfasst, um bei der Ausführung den folgenden Schritt durchzuführen:
Empfangen, am Eingang, eines Befehls von einem Benutzer, der die bei der Anzeige des dreidimensionalen digitalen Musters zu verwendenden Betrachtungsbedingungen angibt und eine Szene definiert, die einer Untereinheit der Gesamtheit der Teile des digitalen Modells entspricht,
**dadurch gekennzeichnet, dass** es Befehle umfasst, um bei der Ausführung die folgenden Schritte durchzuführen:
Empfangen, von einem Server, über die Kommunikationsverbindung:
von Detailbilddaten, die ein Detailbild der durch den Benutzer definierten Szene definieren, das entsprechend den durch den Benutzer definierten Betrachtungsbedingungen dargestellt wird, wobei diese Bilddaten anhand von Daten, die das dreidimensionale digitale Modell entsprechend einer detaillierten Geometrie definieren, berechnet werden, und
von vereinfachten Daten, die die Szene entsprechend einer vereinfachten Geometrie definieren,
Berechnen von die Szene darstellenden Bilddaten bei einer Änderung der Betrachtungsbedingungen, anhand der von dem Server empfangenen vereinfachten Daten, und
Anzeigen der bei dem Berechnungsschritt erzeugten Bilddaten.

17. Computerprogrammprodukt zur Ermöglichung des Einsehens eines dreidimensionalen digitalen Modells durch eine Clientstation (3), das Befehle umfasst, um bei der Ausführung die folgenden Schritte durchzuführen:
Empfangen einer Anfrage von einem Client und
Liefern von Daten an den Client (3), um seine Anfrage zu beantworten;
**dadurch gekennzeichnet, dass** es Befehle umfasst, um bei der Ausführung die folgenden Schritte durchzuführen:
Zugreifen auf Daten, die das dreidimensionale digitale Modell entsprechend einer detaillierten Geometrie definieren,
Berechnen, anhand der das digitale Modell entsprechend der detaillierten Geometrie definierenden Daten, von Bilddaten, die ein Detailbild einer durch einen Client definierten Szene definieren, das entsprechend den durch den Client definierten Betrachtungsbedingungen dargestellt wird, wobei die Szene einer Untereinheit von Teilen des durch den Client ausgewählten digitalen Modells entspricht,
und
Übertragen, an den Client (3):
der detaillierten Bilddaten und
von vereinfachten Daten, die die Szene entsprechend einer vereinfachten Geometrie definieren.

## Claims

1. A system (1/100) for consulting a digital model, comprising a server and at least one user terminal (3/100) connected by a communications link,
the server comprising means for accessing data defining a three-dimensional digital model; and
the user terminal comprising a display unit (36/106) and a user interface (40) enabling the user to define the observation conditions to be employed while displaying the digital model, and to define a scene corresponding to a subset of the parts making up the digital model,
the system being **characterized in that**:
the server is adapted to transmit to the user terminal, via the communications link:
detailed image data corresponding to a scene defined by the user terminal, as calculated by the server in compliance with the observation conditions defined by the user terminal, the detailed image data being calculated by the server on the basis of data defining the parts of the digital model according to a detailed geometry; and
coarse data defining said scene defined by the user, according to a simplified geometry;
and **in that** the user terminal further comprises
receiver means adapted to receive said detailed image data and said coarse data, the display unit being adapted to display a detailed image of said scene on the basis of the detailed image data received from the server, and
calculation means (38/102) adapted to calculate image data representing said scene, upon a change of observation conditions, based on the coarse data received from the server.

2. A digital model consultation system (1/100) according to claim 1, **characterized in that** the server includes semantic mapping calculation means adapted to calculate a semantic map that indicates, for each location in the detailed image, an identifier of the corresponding part in the digital model, the server being adapted to send said semantic map to the user terminal, and the calculation means (38/102) of the user terminal is adapted, when the user indicates a location in a detailed image displayed by the display unit (36/106), to identify the part selected by the user by consulting the semantic map in order to determine which part of the model corresponds to the location selected by the user.

3. A digital model consultation system (1/100) according to claim 2, **characterized in that** the calculation means (38/102) of the user terminal is adapted to control the rendering of the pixels of the image displayed by the display unit (36/106) so that the pixels of the image that correspond to the part selected by the user, as identified from the semantic map, are rendered using displaying that highlights the part in question.

4. A digital model consultation system (1/100) according to claim 1, 2 or 3, **characterized in that** the server is adapted to send to the user terminal image data defining thumbnail images corresponding to the parts visible in the detailed image, and the calculation means (38/102) of the user terminal is adapted, when the user selects a part displayed by the display unit (36/106), to verify whether the user terminal has a thumbnail of the part in question and to cause the received thumbnail to be displayed in superposition on the displayed image.

5. A digital model consultation system (1/100) according to claim 4, **characterized in that** the calculation means (38/102) of the user terminal is adapted, when the user selects an assembly displayed by the display unit (36/106), to verify whether the user terminal has thumbnails of the parts of the assembly in question and to cause the thumbnails of the parts of said assembly to be displayed with a hierarchical rendering in which the transparency of a displayed thumbnail depends on the level of the corresponding part in an assembly hierarchy.

6. A digital model consultation system (1) according to any previous claim, **characterized in that** the server (2) is adapted to calculate said coarse data corresponding to a simplified version of the digital model.

7. A digital model consultation system (1) according to claim 4, **characterized in that** the server (2) comprises thumbnail calculation means (8) adapted to calculate the image data defining said thumbnails.

8. A user terminal (3/100) for consultation of a three-dimensional digital model, the user terminal comprising a display unit (36/106) and a user interface enabling the user to define the observation conditions to be used when displaying the digital model and to define a scene corresponding to a subset of the parts making up the digital model, the user terminal (3/100) being **characterized in that** it further comprises:
receiver means adapted to receive from a server by means of a communications link:
image data defining a detailed image of the scene specified via the user interface, the image data being calculated under the observation conditions defined by means of the user interface; and
coarse data defining said scene according to a simplified geometry;
the display unit being adapted to display a detailed image of said scene on the basis of the detailed image data received from the server; and
calculation means (38/102) adapted to calculate image data representing said scene, upon a change of observation conditions, on the basis of said coarse data received from the server.

9. A digital-model-consultation user terminal (3/100) according to claim 8, **characterized in that** the receiver means is adapted to receive from the server a semantic map that specifies, for each location in the detailed image, an identifier of the corresponding part in the digital model, and the calculation means (38/102) is adapted, when the user indicates a location in a detailed image displayed by the display unit (36/106), to identify the part selected by the user by consulting the semantic map received from the server.

10. A digital-model-consultation user terminal (3/100) according to claim 9, **characterized in that** the calculation means (36/106) is adapted to control the rendering of pixels of the image displayed by the display unit (36/106) so that the pixels in the image that correspond to the part selected by the user, as identified from the semantic map, are rendered using displaying that highlights the part in question.

11. A digital-model-consultation user terminal (3/100) according to claim 8, 9 or 10, **characterized in that** the receiver means is adapted to receive from the server thumbnails of parts that are visible in the detailed image, and **in that** the calculation means (38/102) is adapted, when the user selects a part displayed by the display unit (36/106), to verify whether the user terminal has a thumbnail for the part in question and to cause the thumbnail received from the server to be displayed in superposition on the displayed image.

12. A digital-model-consultation user terminal (3/100) according to claim 11, **characterized in that** the calculation means (38/102) is adapted, when the user designates an assembly displayed by the display unit (36/106), to verify whether the user terminal has thumbnails for the parts of the assembly in question and to cause the thumbnails of the parts of said assembly to be displayed with hierarchical rendering in which the transparency of a displayed thumbnail depends on the level of the corresponding part in the assembly hierarchy.

13. A digital-model-consultation system server (2) adapted to enable a three-dimensional digital model to be consulted by at least one client (3), the server (2) comprising means for accessing data defining the three-dimensional digital model according to a detailed geometry, and a client interface adapted to receive requests from the client (3) and to provide data to the client (3) in response;
**characterized in that** the server further comprises means (8) for calculating image data defining a detailed image of a scene defined by a client (3) and viewed under observation conditions defined by the client (3), said scene corresponding to a subset of the parts of the digital model selected by the client, the detailed image being calculated from said data defining the digital model according to the detailed geometry,
and wherein the client interface of the server (2) is adapted to send to the client (3) the detailed image data, and coarse data defining said scene defined by the client, according to a simplified geometry.

14. A digital-model-consultation system server (2) according to claim 13, **characterized in that** it comprises semantic map calculation means configured to calculate a semantic map specifying for each location in the detailed image an identifier of the corresponding part in the digital model, and wherein the client interface is adapted to transmit said semantic map to the client (3).

15. A digital-model-consultation system server (2) according to claim 13 or 14, **characterized in that** it comprises thumbnail calculation means adapted to calculate image data defining thumbnails corresponding to parts visible in the detailed image provided to the client, and **in that** the client interface is adapted to send said thumbnail-defining image data to the client (3).

16. A computer program product for implementing consultation of a three-dimensional digital model via a communications link, the product comprising instructions for performing the following steps on being executed:
inputting an instruction coming from a user indicating the observation conditions to be employed while displaying the three-dimensional digital model, and defining a scene corresponding to a subset of the set of parts of the digital model;
**characterized in that** it comprises instructions for performing the following steps on being executed:
receiving from a server and via the communications link:
detailed image data defining a detailed image of the scene defined by the user and visualized according to the observation conditions defined by the user, the image data being calculated from data defining the three-dimensional digital model according to a detailed geometry; and
coarse data defining said scene using a simplified geometry;
calculating image data representing said scene during a change of observation conditions, on the basis of coarse data received from the server; and
displaying the image data produced during the calculation step.

17. A computer program product for enabling a three-dimensional digital model to be consulted by a client terminal (3), comprising instructions for performing the following steps on being executed:
receiving a request from a client; and
supplying data to the client (3) in order to response to the request;
**characterized in that** it comprises instructions for performing the following steps on being executed:
accessing data defining the three-dimensional digital model according to a detailed geometry;
using said data defining the digital model using detailed geometry to calculate image data defining a detailed image of a scene defined by a client and viewed under observation conditions defined by the client, said scene corresponding to a subset of the parts of the digital model selected by the client; and
transmitting to the client (3):
said detailed image data; and
coarse data defining said scene using simplified geometry.
